# EUROPÄISCHE PATENTSCHRIFT

(11) **EP 3 598 099 B1**
(45) Veröffentlichungstag und Bekanntmachung des Hinweises auf die Patenterteilung: **03.09.2025**
(21) Anmeldenummer: 18183924.2
(22) Anmeldetag: 17.07.2018
(51) Int. Cl.: G01M 11/06

(54) **VERFAHREN UND SYSTEME ZUM JUSTIEREN VON KRAFTFAHRZEUGSCHEINWERFERN**
METHOD AND SYSTEMS FOR ADJUSTING MOTOR VEHICLE HEADLAMPS
PROCÉDÉS ET SYSTÈMES DE RÉGLAGE DES PHARES DE VÉHICULE AUTOMOBILE

(43) Veröffentlichungstag der Anmeldung: 22.01.2020
(73) Patentinhaber: ZKW Group GmbH, 3250 Wieselburg (AT)
(72) Erfinder: Reinprecht, Markus, 3384 Pielachhäuser (AT); Hartmann, Peter, 3392 Schönbühel-Aggsbach (AT)
(74) Vertreter: Patentanwaltskanzlei Matschnig & Forsthuber OG

(56) Entgegenhaltungen:
- EP-A1- 2 119 592
- DE-A1- 102008 031 159
- DE-A1- 102012 023 126
- DE-A1- 102012 200 048
- P. F. ALCANTARILLA ET AL: "Automatic LightBeam Controller for driver assistance", MACHINE VISION AND APPLICATIONS., vol. 22, no. 5, 27 March 2011 (2011-03-27), DE, pages 819 - 835, XP055546834, ISSN: 0932-8092, DOI: 10.1007/s00138-011-0327-y

## Beschreibung

Die Erfindung betrifft ein Verfahren zum Justieren eines Kraftfahrzeugscheinwerfer eines Kraftfahrzeugscheinwerfersystems für ein erstes Kraftfahrzeug während seines Betriebs mithilfe einer Rückmeldung in Form elektromagnetischer Signale, bereitgestellt von einem Rückmelde-System in einem zweiten Kraftfahrzeug.

Unter Fehleinstellung eines Kraftfahrzeugscheinwerfers werden seine Einstellungen, bei welchen der Kraftfahrzeugscheinwerfer Bereiche in seinem Vorfeld beleuchtet, die nicht beleuchtet werden sollen. Eine solche Fehleinstellung kann unter gewissen Bedingungen zur Blendung von Verkehrsteilnehmern führen, die sie in dem Vorfeld des fehlerhaft eingestellten Kraftfahrzeugscheinwerfers befinden. Besonders bei so genannten ADB Systemen (ADB für *Adaptive Drive Beam)* soll eine solche Fehleinstellung vermieden werden, da sie bei einem fehleingestellten Ausblendszenario, das heißt bei einem nicht genauen Ausblenden von Fenstern in der Lichtverteilung, in den sich entgegenkommende und/oder vorausfahrende Kraftfahrzeuge befinden, zu einer Blendung der Fahrer dieser Kraftfahrzeuge führen.

Im Weiteren werden Begriffe "Einstellungen", "Fehleinstellung", "Grundeinstellungen" in Bezug auf Kraftfahrzeugscheinwerfer verwendet. Typischerweise werden darunter bestimmte Einstellparameter verstanden, die die Steuereinrichtung des Kraftfahrzeugscheinwerfersystems verwendet, um den Kraftfahrzeugscheinwerfer einzustellen, damit eine der Parametrisierung entsprechende Lichtverteilung abgestrahlt wird. Diese Parameter können folgende Größen umfassen: Höhe, Breite, Helligkeit in bestimmten Bereichen beziehungsweise Punkten der Lichtverteilung, Maße von Segmenten und Grad ihren Überlapps, wenn die Lichtverteilung segmentiert ist. Diese Liste von Größen ist natürlich nicht vollständig. Es können auch andere Parameter in den Einstellungen eines Kraftfahrzeugscheinwerfers enthalten sein. Diese Parameter können beispielsweise in der Steuereinrichtung gespeichert sein.

Die Information über eine Blendung verursachende Fehleinstellung wird im Kontext der vorliegenden Erfindung oft einfach als Information beziehungsweise Blendungsinformation oder Fehleinstellungsinformation bezeichnet.

Die elektromagnetischen Signale können Wellenlängenbereiche von Licht, insbesondere sichtbarem Licht (400 nm bis 800 nm) oder Funk nützen. Beispielsweise können die elektromagnetischen Signale Lichtpulse einer vorbestimmten Dauer sein.

Die vorgenannte Blendung verursachende Fehleinstellung des zumindest einen Kraftfahrzeugscheinwerfers bezieht sich im Kontext der vorliegenden Erfindung auf die Blendung eines anderen Verkehrsteilnehmers, vorzugsweise eines Fahrers eines entgegenkommenden Kraftfahrzeugs.

Verfahren zum Justieren der Kraftfahrzeugscheinwerfersysteme beziehungsweise ihrer Kraftfahrzeugscheinwerfer sind aus dem Stand der Technik bekannt.

Bei modernen Kraftfahrzeugscheinwerfersystem tritt aber ein Problem auf, dass durch diverse äußere Einflüsse (Temperatur, Alterung, o.Ä.) die abgestrahlte Lichtverteilung teilweise stark verstellt ist, sodass den gesetzlichen Anforderungen oder den Kundenwünschen nicht mehr entsprochen werden kann. Oftmals erkennt ein Kraftfahrzeuglenker solche fehlerhaften Kraftfahrzeugscheinwerfer-Einstellungen nicht, weshalb eine Neueinstellung der Kraftfahrzeugscheinwerfer meist sehr selten, beispielsweise einmal jährlich, vorgenommen wird und mit einem beträchtlichen Aufwand verbunden ist. Bei den oben genannten ADB Systemen kommt das Problem der Fehleinstellung noch stärker zum Vorschein, da hier als neuartige Fehlerquelle zusätzlich zur falschen Höheneinstellung eine "horizontale Fehleinstellung" auftritt. Bei ADB Systemen/Kraftfahrzeugscheinwerfern wird diesem Problem begegnet, indem bei der Ausblendung anderer Verkehrsteilnehmer aktuell recht große Abstände voreingestellt werden, um Fehlerfälle und eine möglicherweise daraus resultierende Blendung sicher auszuschließen, wodurch sich ein deutlicher Performanceverlust im Vergleich zur optischen Grundauslegung ergibt.

Die DE 10 2008 031159 A1, die DE 10 2012 200048 A1, die EP 2 119 592 A1 sowie die DE 10 2012 023126 A1 offenbaren Verfahren zum Justieren eines Kraftfahrzeugscheinwerfers aus dem Stand der Technik.

Es ist eine Aufgabe der vorliegenden Erfindung die oben genannten Nachteile des Standes der Technik zu beseitigen. Diese Aufgabe wird mit dem eingangs erwähnten Verfahren gelöst, wobei
* das Kraftfahrzeugscheinwerfersystem eine Steuereinrichtung, zumindest einen der Steuereinrichtung zugeordneten Kraftfahrzeugscheinwerfer und der Steuereinrichtung zugeordnete Detektionsmittel umfasst und dazu eingerichtet ist, eine Lichtverteilung zumindest eines vorgegebenen Typs zu erzeugen, welche Lichtverteilung durch Einstellen des zumindest einen Kraftfahrzeugscheinwerfers mittels der Steuereinrichtung zu einer modifizierten Lichtverteilung dynamisch modifizierbar ist, wobei
   - die Detektionsmittel zum Detektieren der elektromagnetischen Signale eingerichtet sind, welche elektromagnetischen Signale für das Justieren des Kraftfahrzeugscheinwerfersystems relevante Daten beinhalten, wobei die Daten Information über eine Blendung verursachende Fehleinstellung des zumindest einen Kraftfahrzeugscheinwerfers beinhalten, und
   - die Steuereinrichtung zum Auswerten der elektromagnetischen Signale hinsichtlich der Daten und zum Extrahieren der Information aus den Daten eingerichtet ist, wobei

das Rückmelde-System zur Berechnung und Ausgabe des elektromagnetischen Signals umfasst:
   * eine Detektionseinrichtung, eine Recheneinheit und eine Übertragungseinrichtung - hinsichtlich des Kraftfahrzeugscheinwerfersystems - extern bereitgestellt sind und zum Erzeugen der Rückmeldung auf die Lichtverteilung eingerichtet sind, wobei
      - die Detektionseinrichtung zum Detektieren zumindest eines Teils der dynamisch modifizierbaren Lichtverteilung zumindest eines vorgegebenen Typs eingerichtet ist;
      - die Recheneinheit zum Identifizieren von Bereichen in dem detektierten Teil der Lichtverteilung, in denen eine Blendung vorliegt, zum Zuordnen den identifizierten Bereichen einer Information über eine Blendung verursachende Fehleinstellung des zumindest einen Kraftfahrzeugscheinwerfers und zum Repräsentieren der Information in Form von den zum Justieren des zumindest einen Kraftfahrzeugscheinwerfers relevanten Daten eingerichtet ist, und
      - die Übertragungseinrichtung zum Generieren der elektromagnetischen Signale gemäß den Daten und zum Senden der elektromagnetischen Signale in eine vorgegebene Richtung eingerichtet ist,
welches Verfahren folgende Schritte umfasst:
   Schritt K1: Detektieren des zumindest einen Teils der Lichtverteilung mittels der Detektionseinrichtung;
   Schritt K2: Identifizieren von Bereichen in dem detektierten Teil der Lichtverteilung, in denen eine Blendung vorliegt, wobei Beleuchtungsstärke-Werte in dem detektierten Teil der Lichtverteilung ermittelt werden und die ermittelten Beleuchtungsstärke-Werte anschließend mit einem vorgegebenen Schwellenwert verglichen werden,
   Schritt K3: Zuordnen den identifizierten Bereichen einer Information über eine Blendung verursachende Fehleinstellung des zumindest einen Kraftfahrzeugscheinwerfers, wobei die Recheneinheit zum Zuordnen einem jeden Beleuchtungsstärke-Wert, der den dazu korrespondierenden Schwellenwert übersteigt, ein Paar aus einem Lichtstärke-Wert und einer dem Lichtstärke-Wert korrespondierenden Raumrichtung, in welche der zumindest eine Kraftfahrzeugscheinwerfer eine Blendung verursachende Lichtmenge abstrahlt, zuordnet, wobei dieses Paar die Information über eine Blendung verursachende Fehlstellung bilden;
   Schritt K4: Repräsentieren der Information in Form von den zum Justieren des zumindest einen Kraftfahrzeugscheinwerfers relevanten Daten;
   Schritt K5: Generieren der elektromagnetischen Signale gemäß den Daten und Senden der elektromagnetischen Signale in Richtung des zumindest einen Kraftfahrzeugscheinwerfersystems mittels der Übertragungseinrichtung;
   Schritt K6: Detektieren der elektromagnetischen Signale mithilfe der Detektionsmittel;
   Schritt K7: Auswerten der elektromagnetischen Signale hinsichtlich darin enthaltener für das Justieren relevanter Daten und Extrahieren der Information über die Blendung verursachende Fehleinstellung des zumindest einen Kraftfahrzeugscheinwerfers aus den Daten mittels der Steuereinrichtung;
   Schritt K8: Justieren des Kraftfahrzeugscheinwerfersystems mittels der Steuereinrichtung zum Modifizieren der Lichtverteilung aufgrund der extrahierten Information, um die modifizierte Lichtverteilung zu erzeugen, wobei das Justieren des Kraftfahrzeugscheinwerfersystems durch Einstellen des zumindest einen Kraftfahrzeugscheinwerfers mittels der Steuereinrichtung gemäß den ausgewerteten Daten und der aus den Daten extrahierten Information erfolgt, wobei die in die Raumrichtungen abgestrahlte Lichtmenge um einen vorgegebenen Wert reduziert wird, um die modifizierte Lichtverteilung zu erhalten.

Bezugnehmend auf den in der Beschreibungseinleitung erwähnten Dokumente aus dem Stand der Technik offenbaren kein Rückmelde-System eines zweiten Kraftfahrzeugs, welches eingerichtet ist, elektromagnetische Signale bereitzustellen, anhand derer das erste, eigene Kraftfahrzeug die Lichtverteilung modifiziert.

Beispielsweise kann die Blendungsinformation nur aus vorgenannten Raumrichtungen oder aus Paaren bestehen, wobei ein erstes Element eines jeden Paares eine Nachricht über vorhandene Blendung in digitaler Form, wie beispielsweise "Blendung JA/NEIN", und ein zweites Element eines jeden Paares eine dazugehörige Raumrichtung sein kann. In diesem Fall kann auch vorgesehen sein, dass das erfindungsgemäße Verfahren mehrmals wiederholt wird und die abgestrahlte Lichtmenge auf diese Weise in mehreren Iterationen reduziert wird. Wenn nämlich der vorgenannte vorgegebene Wert nicht groß genug ist, um die Blendung zu vermeiden, wird das Kraftfahrzeugscheinwerfersystem weiterhin elektromagnetische Signale empfangen. An dieser Stelle sei angemerkt, dass die modifizierte Lichtverteilung dabei einen zusätzlichen dunklen (wegen der Reduktion der Lichtmenge) Bereich aufweisen oder hinsichtlich der unmodifizierten Lichtverteilung verschoben sein kann.

Es kann zweckdienlich sein, wenn die Fehleinstellungsinformation umfasst:
- zumindest eine Abstrahlrichtung, in welche zumindest eine Abstrahlrichtung der zumindest eine Kraftfahrzeugscheinwerfer blendet,
- einen dieser zumindest einen Abstrahlrichtung zugeordneten Ist-Wert der von dem Kraftfahrzeugscheinwerfer in diese Abstrahlrichtung abgegebenen Lichtstärke, und
- einen dieser zumindest einen Abstrahlrichtung zugeordneten Soll-Wert der Lichtstärke, wobei das Justieren des Kraftfahrzeugscheinwerfersystems solange erfolgt, bis der Ist-Wert den Soll-Wert nicht mehr übersteigt.

Darüber hinaus kann es vorteilhaft sein, wenn aufgrund des Justierens des Kraftfahrzeugscheinwerfersystems durch die Steuereinrichtung eine horizontale und/oder eine vertikale Ausdehnung der Lichtverteilung verringert werden/wird.

Darüber hinaus kann mit Vorteil vorgesehen sein, dass aufgrund des Justierens des Kraftfahrzeugscheinwerfersystems durch die Steuereinrichtung die Lichtverteilung horizontal und/oder vertikal verschoben wird.

Vor allem bei ADB-Kraftfahrzeugscheinwerfersystemen kann es vorteilhaft sein, wenn beim Justieren des Kraftfahrzeugscheinwerfersystems eine horizontale und/oder eine vertikale Ausdehnung eines Ausblendbereiches innerhalb der dynamisch modifizierbaren Lichtverteilung verändert werden/wird.

Unter ADB-Kraftfahrzeugscheinwerfersystemen werden im Allgemeinen Kraftfahrzeugscheinwerfersysteme verstanden, die dynamisch (währen des Betriebs des Systems) modifizierbare, beispielsweise segmentierte Lichtverteilungen erzeugen können. Solche ADB-Kraftfahrzeugscheinwerfersysteme sind dem Fachmann hinlänglich bekannt.

Es kann mit Vorteil vorgesehen sein, dass das Justieren mittels Verringerns einer in zumindest eine Richtung (Raumrichtung/Abstrahlrichtung) abgegebenen Lichtstärke erfolgen kann, wobei das Verringern mittels Änderung zumindest eines, vorzugsweise horizontalen, Abstrahlwinkels des zumindest einen Kraftfahrzeugscheinwerfers erfolgt.

Dabei wird die Ausrichtung der Lichtverteilung (Hauptabstrahlrichtung), vorzugsweise horizontal bezüglich einer Grundrichtung geändert. Unter Grundrichtung wird dabei eine ursprüngliche Ausrichtung der Lichtverteilung verstanden, die die oben genannte Blendung verursachende Fehleinstellung aufweist, die es zu korrigieren gilt. Der Abstrahlwinkel kann kleiner oder auch größer - je nach konkreter Situation - gemacht werden.

Es kann zweckdienlich sein, wenn auf der Steuereinrichtung Grundeinstellungen abgespeichert sind, gemäß welchen Grundeinstellungen die Lichtverteilung bei Inbetriebnahme des Kraftfahrzeugscheinwerfersystems erzeugt wird, wobei die Steuereinrichtung aufgrund dieser Grundeinstellungen und der extrahierten Information über die Blendung verursachende Fehleinstellung modifizierte Einstellungen erzeugt und gemäß diesen modifizierten Einstellungen das Kraftfahrzeugscheinwerfersystem justiert, damit die modifizierte, vorzugsweise nicht blendende, Lichtverteilung erzeugt wird.

Es sei angemerkt, dass mit solchen Grundeinstellungen das Kraftfahrzeugscheinwerfersystem eine Lichtverteilung mit der oben genannten Grundrichtung erzeugt.

Darüber hinaus kann es vorgesehen sein, dass die Steuereinrichtung die modifizierten Einstellungen speichert (intern oder extern - z.B. Bordcomputer o.Ä.) und auf der Steuereinrichtung eine Software zum maschinellen Lernen installiert ist, welche dazu programmiert ist, aufgrund der Grundeinstellungen und der modifizierten Einstellungen zu entscheiden, zumindest einen Teil der Grundeinstellungen durch einen korrespondierenden Teil der Einstellungen zu ersetzen oder die Grundeinstellungen unverändert zu lassen.

Es kann mit Vorteil vorgesehen sein, dass das Kraftfahrzeugscheinwerfersystem ein Computerprogramm oder ein computerlesbares, vorzugsweise tragbares, Speichermedium, wobei das Computerprogramm vorzugsweise auf der Steuereinrichtung gespeichert ist beziehungsweise die Steuereinrichtung das computerlesbare Speichermedium umfasst und das Verfahren durch die Steuereinrichtung ausgeführt wird.

Es kann zweckdienlich sein, wenn die vorgegebenen Schwellenwerte bei etwa 1 Lux liegen. In der KFZ-Beleuchtung sind die Werte der Beleuchtungsstärke normalerweise auf die Werte bezogen, die auf einem in etwa 25 m Entfernung senkrecht zur Hauptabstrahlrichtung des Kraftfahrzeugscheinwerfers aufgestellten Messschirm gemessen werden. Der auf diesem Messschirm gemessene Wert von 1 lx entspricht einem Wert von Lichtstärke (von dem Kraftfahrzeugscheinwerfer abgestrahlte Lichtmenge) von etwa 625 Candela (cd).

Es kann außerdem vorteilhaft sein, wenn aus den Raumrichtungen Abstrahlrichtung-Korrekturen errechnet werden, welche Abstrahlrichtung-Korrekturen einen Teil der Information über eine Blendung verursachende Fehleinstellung bilden können. Die Abstrahlrichtung-Korrekturen können im Bereich von etwa 0,1° bis etwa 2,5° liegen.

Dies kann beispielsweise in einer Situation nützlich sein, wenn einer Fehleinstellung bei einem Kraftfahrzeugscheinwerfersystem des vorgenannten ADB-Typs vorliegt, insbesondere wenn die Fehleinstellung Größe und/oder Position eines Ausblendbereichs betrifft. Dabei können die Abstrahlrichtung-Korrekturen eine Feinjustage des ADB-Kraftfahrzeugscheinwerfersystems ermöglichen. Beispielsweise kann ein Ausblendbereich etwas aus seiner vorgeschriebenen Position (um etwa 0,1° bis etwa 2,5°) verschoben und oder etwas breiter und/oder höher (etwa 0,1° bis etwa 1°) sein, als er sein sollte.

Abstrahlrichtung-Korrekturen können aufgrund des detektierten Teils der Lichtverteilung errechnet werden, wenn z.B. ein blendendes Segment einer Breite β detektiert wird. Diese Breite β wird mit den Signalen 5 an den Kraftfahrzeugscheinwerfer übermittelt, der dann seine Einstellung derart, dass der ursprüngliche Öffnungswinkel α₀ (Grundeinstellung) auf Öffnungswinkel α reduziert wird und die Breite des blendenden Segments auf 0 reduziert ist. An dieser Stelle sei angemerkt, dass zum Detektieren eines blendenden Segments einer Breite β eine einfache Photodiode reichen kann, wenn die Lichtverteilung eine segmentierte Fernlichtverteilung oder eine ADB-Lichtverteilung ist.

Beispielsweise kann die Recheneinheit zum Ermitteln von Beleuchtungsstärke-Werten in dem detektierten Teil der Lichtverteilung und zum Vergleichen der Beleuchtungsstärke-Werte mit dazu korrespondierenden vorgegebenen Schwellenwerten eingerichtet sein. Dies kann dann besonders vorteilhaft sein, wenn die Detektionseinrichtung eine Vorrichtung und/oder eine Software umfasst, die geeignet ist Leuchtdichteverteilungen aufzunehmen.

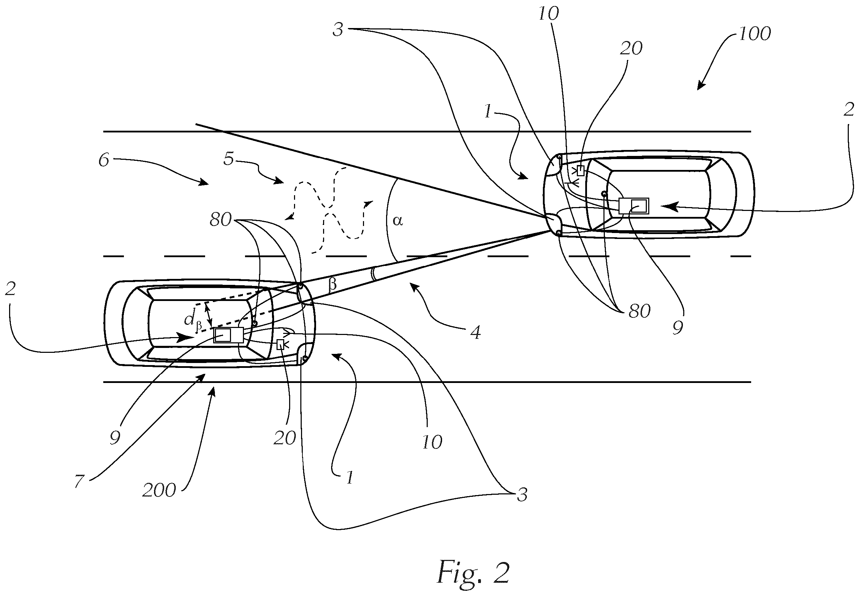

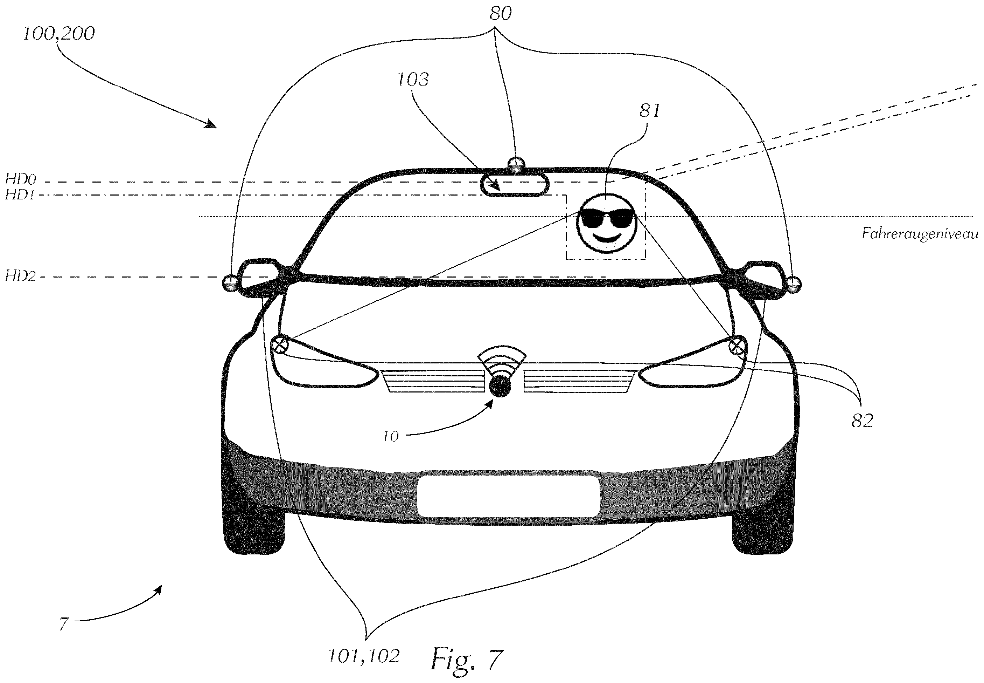

Erfindungsgemäß ist vorgesehen, dass die Recheneinheit zum Zuordnen einem jeden Beleuchtungsstärke-Wert, der den dazu korrespondierenden Schwellenwert vorzugsweise mit statistischer Relevanz übersteigt, eines Paars aus einem Lichtstärke-Wert und einer dem Lichtstärke-Wert korrespondierenden Raumrichtung, wobei diese Paare die Information über eine Blendung verursachende Fehleinstellung bilden. Um eine Raumrichtung zuzuweisen, kann es zweckmäßig sein, wenn die Detektionseinrichtung beispielsweise ortsauflösende Photodioden oder ortsauflösende Kameras umfasst. Es können aber auch normale (nicht ortauflösende) Photodioden verwendet werden, wenn die Photodioden an Stellen des Kraftfahrzeugs angeordnet sind, deren Positionen der Recheneinheit bekannt sind (siehe z.B. Figuren 2 oder 7).

Außerdem kann das Rückmelde-System ein solches Computerprogramm oder ein solchen computerlesbares Speichermedium umfassen, wobei vorzugsweise das Computerprogramm auf der Recheneinheit gespeichert ist beziehungsweise die Recheneinheit das computerlesbare Speichermedium umfasst.

Bei einem Kraftfahrzeug mit zumindest einem Rückmelde-System kann es zweckdienlich sein, wenn die Detektionseinrichtung an zumindest einer Längsseite des Kraftfahrzeugs, vorzugsweise in zumindest einem Kraftfahrzeugscheinwerfer und/oder in zumindest einem Außenspiegel und/oder einem Rückspiegel angeordnet ist.

Dabei kann es zweckmäßig sein, wenn die Detektionseinrichtung als eine Mehrzahl, vorzugsweise vier, von Lichtsensoren, insbesondere von Photodioden, ausgebildet ist.

Es kann mit Vorteil vorgesehen sein, dass die Detektionseinrichtung an einer äußeren Umfangskontur (beispielsweise seitlich und oben) des Kraftfahrzeugs angeordnet ist, welche äußere Umfangskontur in einer zur Längsachse des Kraftfahrzeugs orthogonal stehenden Ebene liegt.

Die Erfindung samt weiteren Vorteilen ist im Folgenden an Hand beispielhafter Ausführungsformen näher erläutert, die in der Zeichnung veranschaulicht sind. In dieser zeigt
Fig. 1 ein Kraftfahrzeugscheinwerfersystem und ein Rückmelde-System in einem Lichttechniklabor;
Fig. 2 zwei aneinander vorbeifahrende Kraftfahrzeuge mit jeweils einem Kraftfahrzeugscheinwerfer- und Rückmelde-System;
Fig. 3 ein Verfahren zum Justieren eines Kraftfahrzeugscheinwerfersystems;
Fig. 4 ein Verfahren zum Bereitstellen elektromagnetischer Signale;
Fig. 5 ein Verfahren zum Justieren eines der Kraftfahrzeugscheinwerfersysteme der Figur 2;
Fig. 6a und 6b ursprüngliche und modifizierte Fernlichtverteilung, und
Fig. 7 ein Kraftfahrzeug mit an den Außen- und dem Rückspiegel angeordneten Photodioden.

In den folgenden Figuren bezeichnen - sofern nicht anders angegeben - gleiche Bezugszeichen gleiche Merkmale.

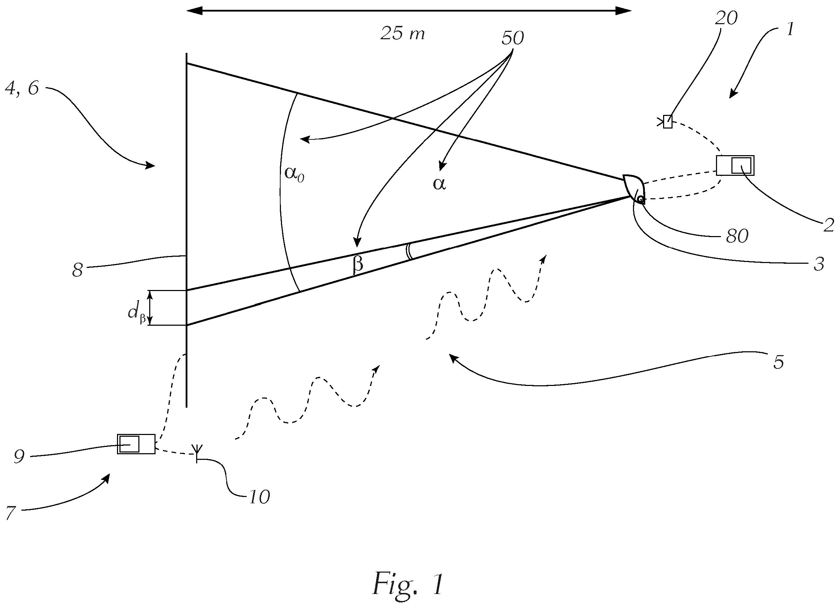

Zunächst wird auf Figur 1 Bezug genommen. Diese zeigt schematisch eine mögliche Situation, bei der ein Kraftfahrzeugscheinwerfersystem 1 während seines Betriebs justiert wird. Das Kraftfahrzeugscheinwerfersystem 1 kann dem Kraftfahrzeugscheinwerfersystem entsprechen. Das Kraftfahrzeugscheinwerfersystem 1 umfasst eine Steuereinrichtung **2,** einen der Steuereinrichtung 2 zugeordneten Kraftfahrzeugscheinwerfer 3 und der Steuereinrichtung 2 zugeordnete Detektionsmittel 20.

Das Kraftfahrzeugscheinwerfersystem 1 kann beispielsweise in einem Lichttechniklabor, in einer Fertigungshalle bzw. Montagestraße oder in einer Autowerkstatt (beispielsweise in einem in ein Kraftfahrzeug eingebauten Zustand (in Figur 1 nicht gezeigt)) aufgestellt sein und erzeugt im Betrieb eine Lichtverteilung **4,** 6 zumindest eines vorgegebenen Typs. In einem Lichttechniklabor wird die Lichtverteilung 4, 6 auf einen Messschirm 8 projiziert, der typischerweise in einer ca. 25 Meter Entfernung quer zur optischen Achse des Kraftfahrzeugscheinwerfers 3 aufgestellt sein. Der Messschirm 8 ist ein Beispiel einer Detektionseinrichtung.

Die Lichtverteilung ist 4 durch Einstellen des Kraftfahrzeugscheinwerfers 3 mittels der Steuereinrichtung 2 zu einer modifizierten Lichtverteilung 6 dynamisch, also während des Betriebs modifizierbar. Es versteht sich, dass die modifizierte Lichtverteilung 6 im Lichttechniklabor genauso wie die ursprüngliche unmodifizierte Lichtverteilung 4 auf den Messschirm 8 projiziert werden kann.

Die Detektionsmittel 20 sind zum Detektieren - in Hinblick auf das Kraftfahrzeugscheinwerfersystem 1 - externer elektromagnetischer Signale 5 eingerichtet. Die externen elektromagnetischen Signale 5 werden dabei durch ein Rückmelde-System 7 bereitgestellt/erzeugt und beinhalten für das Justieren des Kraftfahrzeugscheinwerfersystems 1 beziehungsweise des Kraftfahrzeugscheinwerfers 3 des Kraftfahrzeugscheinwerfersystems 1 relevante Daten 50. Die Daten 50 beinhalten ihrerseits Information über eine Blendung verursachende Fehleinstellung des Kraftfahrzeugscheinwerfers 3.

Der oben genannte Messschirm 8 ist ein Beispiel einer Detektionseinrichtung, die einen Teil des Rückmelde-Systems 7 bildet und zumindest einen Teils der mittels des Kraftfahrzeugscheinwerfers 3 erzeugten (ursprünglichen oder modifizierten) Lichtverteilung 4, 6 detektiert. In diesem konkreten Beispiel wird die gesamte dynamisch modifizierbare Lichtverteilung 4, 6 detektiert. Es versteht sich, dass die Detektionseinrichtung (hier Messschirm 8) im Allgemeinen im Stande ist, nicht nur die ursprüngliche Lichtverteilung 4 und die modifizierte Lichtverteilung 6 zu detektieren, sondern den Gesamtprozess der Änderung der ursprünglichen Lichtverteilung 4 (kontinuierlich) zu überwachen. Später wird ein Beispiel einer Detektionseinrichtung gezeigt (siehe Figur 2), die mehrere Lichtsensoren **80,** beispielsweise Photodioden und/oder Kameras, insbesondere ortsauflösende Photodioden und/oder Kameras aufweist. Die (ortsauflösende) Photodioden können die Lichtverteilungen 4, 6 nur punktuell messen. Eine kontinuierliche Überwachung der Änderung/Modifizierung der ursprünglichen Lichtverteilung 4 ist auch in diesem Fall möglich.

Weiters umfasst das Rückmelde-System 7 eine Recheneinheit 9. Die Recheneinheit 9 ermittelt für den detektierten Teil der Lichtverteilung 4, 6 beziehungsweise für die gesamte Lichtverteilung 4, 6 Beleuchtungsstärke-Werte und vergleicht diese mit dazu korrespondierenden vorgegebenen Schwellenwerten. Diese Schwellenwerte können beispielsweise gesetzlichen Regelungen entnommen werden und hängen sind für verschiedene Abstrahlrichtungen unterschiedlich. Solche Zusammenhänge sind dem Fachmann wohl bekannt. Ein Beispiel dazu stellen die "Passing Beam Photometric Requirements" aus ECE-R 123. In einem Bereich, in dem sich beispielsweise Gesicht eines Fahrers eines entgegenkommenden Kraftfahrzeugs befindet soll nicht mit mehr als 1 Lux beleuchtet werden - 1 lx ist also ein Beispiel eines solchen Schwellenwertes. Wie bereits erwähnt, entspricht der Wert von 1 lx, der auf dem Messschirm 8 gemessen wird, in etwa einem Wert von Lichtstärke (von dem Kraftfahrzeugscheinwerfer 3 abgestrahlte Lichtmenge) von etwa 625 Candela (cd). Es versteht sich, dass die Erfindung auf die Werte der Beleuchtungsstärke nicht beschränkt ist. Es können selbstverständlich andere photometrische Größen verwendet werden, die sich für eine Ermittlung einer Blendung eignen.

Auf das Generieren der externen elektromagnetischen Signale 5 wird später noch eingegangen. In diesem Stadium wird angenommen, dass die externen elektromagnetischen Signale 5 vorhanden sind, mittels der Detektionsmittel 20 detektiert werden und für das Justieren des Kraftfahrzeugscheinwerfersystems 1 relevante Daten 50 beinhalten, wobei die Daten 50 Information über eine Blendung verursachende Fehleinstellung des zumindest einen Kraftfahrzeugscheinwerfers 3 beinhalten.

Die Steuereinrichtung 2 ist eingerichtet, die detektierten Signale 5 hinsichtlich der Daten 50 auszuwerten und die Information aus den Daten 50 zu extrahieren.

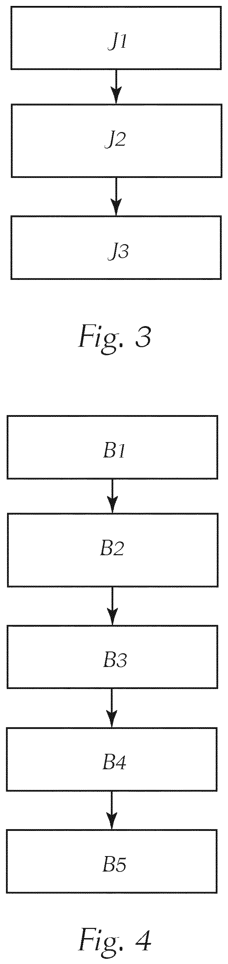

Zum Justieren des Kraftfahrzeugscheinwerfersystems 1 beziehungsweise des Kraftfahrzeugscheinwerfers 3 werden nun folgende, als ein Flussdiagramm in Figur 3 dargestellte Schritte ausgeführt.

In einem ersten Schritt - Schritt **J1** - die externen elektromagnetischen Signale 5 mithilfe der Detektionsmittel 20 detektiert. In einem zweiten Schritt - Schritt **J2** - werden die externen elektromagnetischen Signale 5 hinsichtlich darin enthaltener für das Justieren relevanter Daten 50 ausgewertet und die Information über die Blendung verursachende Fehleinstellung des Kraftfahrzeugscheinwerfers 3 aus den Daten 50 mittels der Steuereinrichtung 2 extrahiert.

In einem dritten Schritt - Schritt J3 - wird das Kraftfahrzeugscheinwerfersystem 1 mittels der Steuereinrichtung 2 gemäß der extrahierten Information justiert, um die Lichtverteilung 4 zu der modifizierten Lichtverteilung 6 zu modifizieren.

Die vorgenannte Information kann beispielsweise Raumrichtungen umfassen, in welche Raumrichtungen der zumindest eine Kraftfahrzeugscheinwerfer 3 blendet und in Schritt J3 die in die Raumrichtungen abgestrahlte Lichtmenge um einen vorgegebenen Wert reduziert wird, um die modifizierte Lichtverteilung 6 zu erhalten. Diese Raumrichtungen können z.B. anhand von Positionen von den vorgenannten Lichtsensoren 80 festgelegt werden (siehe Figur 7). Beispielsweise kann die Information nur aus vorgenannten Raumrichtungen oder aus Paaren bestehen, wobei ein erstes Element eines jeden Paares eine Nachricht über vorhandene Blendung in digitaler Form, wie beispielsweise "Blendung JA/NEIN", und ein zweites Element eines jeden Paares eine dazugehörige Raumrichtung sein kann, welche Raumrichtung beispielsweise durch Position der geblendeten Photodiode 80 festgelegt sein kann (beispielsweise linker Außenspiegel in Figur 7). In diesem Fall kann auch vorgesehen sein, dass das Verfahren mehrmals wiederholt wird und die abgestrahlte Lichtmenge schrittweise (in mehreren Iterationen) reduziert wird. Wenn nämlich der vorgenannte vorgegebene/vorprogrammierte Wert, um den die Lichtmenge zu reduzieren ist, nicht groß genug ist, um die Blendung zu vermeiden, wird das Kraftfahrzeugscheinwerfersystem weiterhin elektromagnetische Signale empfangen, weil beispielsweise eine der Photodioden immer noch geblendet wird. Unter einer Blendung einer Photodiode versteht der Fachmann eine Situation, wenn Photodioden- Schwellwert überschritten wird, welcher Photodioden-Schwellwert Blendung entspricht. An dieser Stelle sei angemerkt, dass die modifizierte Lichtverteilung dabei einen zusätzlichen dunklen (wegen der Reduktion der Lichtmenge) Bereich aufweisen oder hinsichtlich der unmodifizierten Lichtverteilung verschoben sein kann.

Außerdem kann vorgesehen sein, dass die Information über die Blendung verursachende Fehleinstellung des Kraftfahrzeugscheinwerfers 3 zumindest eine Abstrahlrichtung, die beispielsweise als Raumwinkel α, β repräsentiert werden kann, in welche zumindest eine Abstrahlrichtung α, β der zumindest eine Kraftfahrzeugscheinwerfer 3 blendet, eines dieser zumindest einen Abstrahlrichtung α, β zugeordneten Ist-Wertes der von dem Kraftfahrzeugscheinwerfer 3 in diese Abstrahlrichtung α, β abgegebenen Lichtstärke, und eines dieser zumindest einen Abstrahlrichtung α, β zugeordneten Soll-Wertes der Lichtstärke umfasst. Dabei erfolgt das Justieren des Kraftfahrzeugscheinwerfersystems 1 beziehungsweise des Kraftfahrzeugscheinwerfers 3 des Kraftfahrzeugscheinwerfersystems 1 solange erfolgt, bis der Ist-Wert den Soll-Wert der in die entsprechende Abstrahlrichtung α, β abgegebenen Lichtstärke nicht mehr übersteigt. Dieser Vorgang kann ebenfalls schrittweise durchgeführt werden, sodass die Verfahrensschritte mehrmals wiederholt werden. In Figur 1 ist beispielsweise zu erkennen, dass der Kraftfahrzeugscheinwerfer 3 ursprünglich einen Lichtkegel mit einem Öffnungswinkel α₀ abstrahlt. Eine Projektion des Lichtkegels auf den Messschirm ist die (unmodifizierte) Lichtverteilung 4. Das Rückmelde-System 7 erkennt nun, dass der Öffnungswinkel α₀ zu groß ist, wodurch die Lichtverteilung 4 beispielsweise zu breit ist, beziehungsweise dass der Kraftfahrzeugscheinwerfer 3 in von einem Raumwinkel β umfassten Richtungen zu viel Licht aussendet. Zu viel heißt, dass der vorgegebene Schwellenwert vorzugsweise mit statistischer Relevanz überschritten wird. Statistisch relevant ist dieses Überschreiten beispielsweise dann, wenn der Schwellenwert beispielsweise in einem Zeitraum von etwa 125 ms dauerhaft überschritten wird. Das Rückmelde-System 7 meldet dieses Überschreiten, vorzugsweise das statistisch relevante Überschreiten, mittels der oben genannten elektromagnetischen Signale 5 an das Kraftfahrzeugscheinwerfersystem 1 (siehe unten), welches die Signale 5 empfängt, auswertet und die Information extrahiert, wie die Lichtverteilung 4 modifiziert werden soll. Danach steuert die Steuereinrichtung 2 den Kraftfahrzeugscheinwerfer 3 gemäß dieser Information. In dem Beispiel gemäß Figur 1 kann die Steuereinrichtung 2 den Kraftfahrzeugscheinwerfer 3 beispielsweise derart steuern, dass der Kraftfahrzeugscheinwerfer in die von dem Raumwinkel β umfassten Abstrahlrichtungen gar kein Licht mehr ausstrahlt - der Lichtkegel wird geschrumpft - oder weniger Licht abgibt, sodass die diesen Abstrahlrichtungen korrespondierenden Schwellenwerte nicht mehr überschritten werden.

Es ist daher durchaus denkbar, dass aufgrund des Justierens des Kraftfahrzeugscheinwerfersystems 1 durch die Steuereinrichtung 2 eine horizontale und/ oder eine vertikale Ausdehnung der Lichtverteilung 4 verringert beziehungsweise horizontal und/oder vertikal verschoben werden kann.

Im Allgemeinen kann das Justieren in Schritt J3 mittels Verringerns einer in zumindest eine Richtung abgegebenen Lichtstärke erfolgen, wobei das Verringern mittels Änderung zumindest eines, vorzugsweise horizontalen, Abstrahlwinkels/Raumwinkels α, β des zumindest einen Kraftfahrzeugscheinwerfers 3 erfolgt.

Dabei wird die Ausrichtung der Lichtverteilung (Hauptabstrahlrichtung), vorzugsweise horizontal bezüglich ihrer ursprünglichen Ausrichtung geändert. Um die Verständlichkeit zu erleichtern, wird angenommen, dass die ursprüngliche Lichtverteilung Blendung verursacht - fehlerhaft eingestellt ist. Der Abstrahlwinkel/Raumwinkel kann kleiner oder auch größer - je nach konkreter Situation - gemacht werden.

Es kann darüber hinaus vorgesehen sein, dass auf der Steuereinrichtung 2 Grundeinstellungen abgespeichert sind, gemäß welchen Grundeinstellungen die (unmodifizierte) Lichtverteilung 4 bei Inbetriebnahme des Kraftfahrzeugscheinwerfersystems erzeugt wird, wobei die Steuereinrichtung 2 aufgrund dieser Grundeinstellungen und der in Schritt J2 extrahierten Information über die Blendung verursachenden modifizierte Einstellungen erzeugt und gemäß diesen modifizierten Einstellungen das Kraftfahrzeugscheinwerfersystem 1 in Schritt J3 justiert, damit die modifizierte, vorzugsweise nicht blendende Lichtverteilung erzeugt wird. Ein Beispiel von solchen Grundeinstellungen ist der Öffnungswinkel α₀ des Abstrahlkegels/Lichtkegels, der bei der Inbetriebnahme des Kraftfahrzeugscheinwerfers 3 abgestrahlt wird.

Es kann dabei zweckdienlich sein, wenn die Steuereinrichtung 2 die modifizierten Einstellungen speichert (intern oder extern - z.B. auf einem Bordcomputer o.Ä.) und auf der Steuereinrichtung 2 eine Software zum maschinellen Lernen installiert ist, welche dazu programmiert ist, aufgrund der Grundeinstellungen und der modifizierten Einstellungen zu entscheiden, zumindest einen Teil der Grundeinstellungen durch einen korrespondierenden Teil der Einstellungen zu ersetzen oder die Grundeinstellungen unverändert zu lassen.

Eine solche Software kann beispielsweise nützlich sein, wenn dem bereits in einem Kraftfahrzeug eingebauten Kraftfahrzeugscheinwerfersystem 1 des Öfteren (beispielsweise fünf bis zehn Mal innerhalb einer Fahrt oder innerhalb einer vorgegebenen Zeit, vorzugsweise innerhalb von einem Tag oder von einer Woche oder innerhalb einer vorgegebener Anzahl gefahrener Kilometer) gemeldet wird, dass der Kraftfahrzeugscheinwerfer 3 in einen und denselben Raumwinkel, beispielsweise β, zu viel Licht abstrahlt. Nach einer Änderung der Grundeinstellungen wird der Kraftfahrzeugscheinwerfer 3 derart in Betrieb genommen, dass er von Anfang an beispielsweise einen Lichtkegel mit einem verringerten Öffnungswinkel α (α= α₀ - β) abstrahlt.

Zum Zweck des Ausführens des Verfahrens kann die Steuereinrichtung 2 ein computerlesbares Speichermedium umfassen, auf welchem ein Computerprogramm gespeichert und ausführbar ist. Das Computerprogramm umfasst dabei Befehle, die bei der Ausführung des Computerprogramms das beschriebene Verfahren auszuführen.

Nun wird ein Beispiel eines Verfahrens zum Bereitstellen der vorgenannten elektromagnetischen Signale 5 beschrieben. Das Verfahren wird mittels des vorgenannten Rückmelde-Systems 7 gemäß folgenden Schritten ausgeführt (siehe Figur 4). In einem ersten Schritt - Schritt B1 - wird mittels der Detektionseinrichtung, beispielsweise eines Messschirms 8 (Figur 1) oder zumindest eines Lichtsensors 80, beispielsweise zumindest einer Kamera und/oder zumindest einer Photodiode (Figuren 1 und 2) zumindest ein Teil der von dem Kraftfahrzeugscheinwerfer 3 abgestrahlten Lichtverteilung 4, 6 detektiert. Dabei kann ein Teil der Lichtverteilung sowohl ein Bereich durchgehender, beispielsweise ein Segment der Lichtverteilung als auch vereinzelte Punkte der Lichtverteilung bedeuten. Es versteht sich, dass die Detektionseinrichtung 8, 80 nicht auf konkrete Form der Lichtverteilung beschränkt ist. Detektionseinrichtung 8, 80 ist eingerichtet, sowohl die unmodifizierte Lichtverteilung 4 als auch die modifizierte Lichtverteilung 6 zu detektieren. Wie bereits erwähnt, kann die Detektionseinrichtung auch alle "Zwischen-Lichtverteilungen" detektieren, die während des Modifizierens der unmodifizierten Lichtverteilung 4 zu der modifizierten Lichtverteilung 6 vom Kraftfahrzeugscheinwerfer 3 abgestrahlt werden.

In einem zweiten Schritt - Schritt B2 - werden Bereiche in dem detektierten Teil der Lichtverteilung 4, in denen eine Blendung vorliegt, identifiziert.

Weiters ist die der Detektionseinrichtung 8, 80 zugeordnete Recheneinheit 9 zum Durchführen eines dritten Schrittes - Schrittes B3 - und eines vierten Schrittes - Schrittes B4 - eingerichtet. In Schritt B3 wird den identifizierten Bereichen eine Information über eine Blendung verursachende Fehleinstellung des zumindest einen Kraftfahrzeugscheinwerfers 3 zugeordnet. Beispielsweise kann die Information nur aus vorgenannten Raumrichtungen oder aus Paaren bestehen, wobei ein erstes Element eines jeden Paares eine Nachricht über vorhandene Blendung in digitaler Form, wie beispielsweise "Blendung JA/NEIN", und ein zweites Element eines jeden Paares eine dazugehörige Raumrichtung sein kann. Dabei ist es zweckmäßig, wenn die Positionen der vorgenannten Bereichen der Lichtverteilung der Recheneinheit 9 bekannt ist.

Die Detektionseinrichtung 8, 80 kann außerdem eingerichtet sein, eine einer mittels des Kraftfahrzeugscheinwerfersystems 1 erzeugten Lichtverteilung entsprechende Leuchtdichteverteilung zu vermessen. Dabei kann es zweckdienlich sein, wenn in Schritt B2 Beleuchtungsstärke-Werte in dem detektierten Teil der Lichtverteilung 4 ermittelt und mit dazu korrespondierenden vorgegebenen Schwellenwerten (z.B. 1 Lux) verglichen werden und in Schritt B3 einem jeden Beleuchtungsstärke-Wert, der den dazu korrespondierenden Schwellenwert vorzugsweise mit statistischer Relevanz übersteigt, ein Paar aus einem Lichtstärke-Wert und einer dem Lichtstärke-Wert korrespondierenden Raumrichtung zugeordnet wird, wobei diese Paare die Information über eine Blendung verursachende Fehleinstellung bilden.

In Schritt B4 wird die Information in Form von den zum Justieren des zumindest einen externen, in Betrieb genommenen Kraftfahrzeugscheinwerfers 3 relevanten Daten 50 repräsentiert.

In einem fünften Schritt - Schritt B5 - werden die elektromagnetischen Signale 5 gemäß diesen Daten 50 generiert und in Richtung des Kraftfahrzeugscheinwerfers 3 gesendet. Um Schritt B5 auszuführen, weist das Rückmelde-System 7 eine dazu eingerichtete Übertragungseinrichtung **10** auf. Die Detektionseinrichtung 8, 80, die Recheneinheit 9 und die Übertragungseinrichtung 10 sind miteinander zwecks gegenseitigen Informationsaustauschs verbunden.

Für das oben beschriebene Beispiel, bei dem die unmodifizierte Lichtverteilung 4 einen zu weit offenen Lichtkegel/Abstrahlkegel ist, kann die Rückmeldung an das Kraftfahrzeugscheinwerfersystem 1 sein, den Öffnungswinkel α₀ des Lichtkegels zu verringern. Dafür ist es denkbar, dass aus den den ermittelten Lichtstärke-Werten korrespondierenden Raumrichtungen Abstrahlrichtung-Korrekturen/Lichtkegel-Korrekturen α, β errechnet werden, welche Abstrahlrichtung-Korrekturen β einen Teil der Information über eine Blendung verursachende Fehleinstellung bilden. Die Abstrahlrichtung-Korrekturen β werden, wie oben beschrieben, an das Kraftfahrzeugscheinwerfersystem 1 übermittelt, wonach die unmodifizierte Lichtverteilung 4 zu der modifizierten Lichtverteilung 6 modifiziert wird, die als ein Lichtkegel mit einem Öffnungswinkel α = α₀ - β ausgebildet ist.

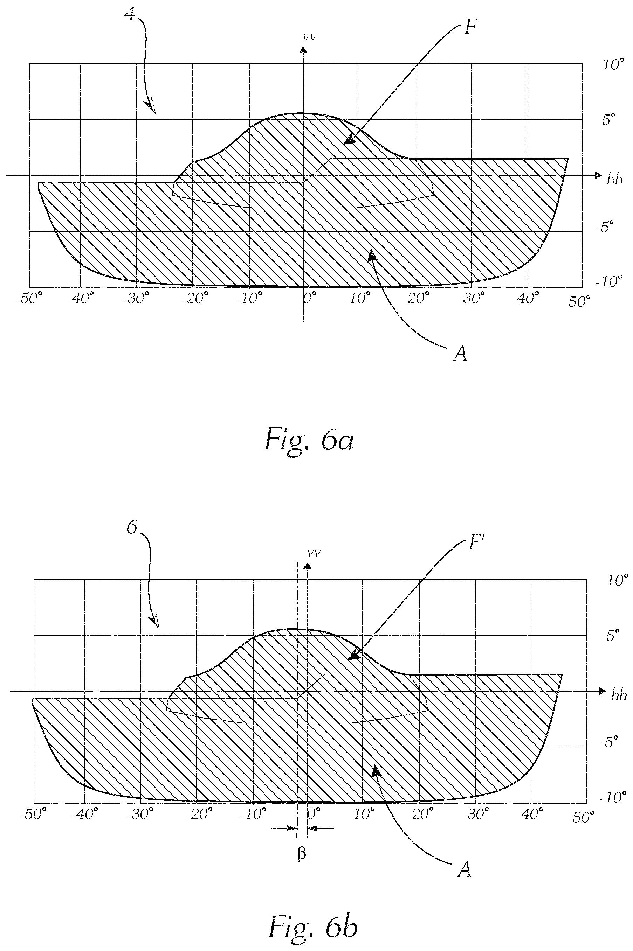

Figuren 6a und 6b lassen erkennen, dass die Abstrahlrichtung-Korrekturen β auch als eine Verschiebung des Lichtkegels umgesetzt werden können. Figur 6a zeigt eine Fernlichtverteilung 4, die als eine Überlagerung einer Abblendlichtverteilung A und einer Teil-Fernlichtverteilung F gebildet ist. Die modifizierte Lichtverteilung 6 ist ebenfalls eine Fernlichtverteilung, die als Überlagerung einer Abblendlichtverteilung A und einer modifizierten, in diesem Fall - um einen Winkel β verschobenen, Teil-Lichtverteilung F' gebildet ist. Figuren 6a und 6b ist eine allgemeine Lehre zu entnehmen, dass die Abstrahlrichtung-Korrekturen nicht nur Korrekturen eines Öffnungswinkels eines Lichtkegels sind.

Die Abstrahlrichtung-Korrekturen können aufgrund des detektierten Teils der Lichtverteilung errechnet werden, wenn z.B. ein blendendes Segment einer Breite d_{β} am Rande der Lichtverteilung 4 detektiert wird (siehe Figur 1). Diese Breite d_{β} kann beispielsweise zuerst in einen Öffnungswinkel β umgerechnet und dann mit den Signalen 5 an das Kraftfahrzeugscheinwerfersystem 1 übermittelt werden oder auch direkt (ohne Umrechnung) an das Kraftfahrzeugscheinwerfersystem 1 gemeldet werden. Danach veranlasst die Steuereinrichtung 2 eine Änderung von Einstellungen des Kraftfahrzeugscheinwerfers 3, sodass der ursprüngliche Öffnungswinkel α₀ (Grundeinstellung) auf Öffnungswinkel α reduziert wird und die Breite des blendenden Segments auf 0 reduziert ist. Bei einer segmentierten Lichtverteilung kann das entsprechende Segment einfach gedimmt beziehungsweise ausgeblendet werden. Dem Fachmann ist klar, dass der Begriff Breite bezogen auf ein Segment einer Lichtverteilung in Grad gemessen werden kann, wie dies üblich auf dem Gebiet der Lichttechnik ist. Darüber hinaus ist es klar, dass die Abstrahlrichtung-Korrekturen auch Teile der Lichtverteilung 4 betreffen können, die nicht am Rande der Lichtverteilung 4 liegen. Figur 7 zeigt ein Beispiel, bei welchem ein inneres Segment der Lichtverteilung 4 ausgeblendet beziehungsweise, wenn bereits ausgeblendet, korrigiert werden sollte.

Beispiele der oben beschriebenen Rückmelde-Systeme 7 zum Bereitstellen der elektromagnetischen Signale 5, die die zum Justieren zumindest des (in Bezug auf das Rückmelde-System 7) externen, in Betrieb genommenen Kraftfahrzeugscheinwerfers 3 relevanten Daten 50 beinhalten sind auf den Figuren 1 und 2 gezeigt. Figur 2 zeigt insgesamt zwei solche Rückmelde-Systeme 3, wobei jedes in einem Kraftfahrzeug eingebaut ist. Wie bereits erwähnt, beinhalten die Daten 50 Information über eine Blendung verursachende Fehleinstellung des zumindest einen Kraftfahrzeugscheinwerfers 3. Dabei umfasst das Rückmelde-System 7 eine Detektionseinrichtung 8, 80, die zum Detektieren des zumindest einen Teils einer von dem zumindest einen Kraftfahrzeugscheinwerfer 3 erzeugten Lichtverteilung 4, 6 eingerichtet ist; eine Recheneinheit 9, die zum Identifizieren von Bereichen in dem detektierten Teil der Lichtverteilung 4, in denen eine Blendung vorliegt, zum Zuordnen den identifizierten Bereichen einer Information über eine Blendung verursachende Fehleinstellung des zumindest einen Kraftfahrzeugscheinwerfers 3 und zum Repräsentieren der Information in Form von den zum Justieren des zumindest einen externen, in Betrieb genommenen Kraftfahrzeugscheinwerfers 3 relevanten Daten 50. Darüber hinaus umfasst das Rückmelde-System 7 eine Übertragungseinrichtung 10, die zum Generieren der elektromagnetischen Signale 5 gemäß den Daten 50 und zum Senden der elektromagnetischen Signale 5 in eine vorgegebene Richtung eingerichtet ist, wobei die Detektionseinrichtung 8, 80, die Recheneinheit 9 und die Übertragungseinrichtung 10 miteinander verbunden sind. Unter Generieren der elektromagnetischen Signale 5 gemäß den Daten 50 ist ein derartiges Generieren der elektromagnetischen Signale 5 zu verstehen, dass die Daten 50 in den elektromagnetischen Signalen 5 enthalten sind. Beispielsweise können die Daten 50 mittels einer Kodierung in die elektromagnetischen Signale 5 geschrieben werden. Das Kraftfahrzeugscheinwerfersystem 1 kann diese Daten 50 aus den elektromagnetischen Signalen 5 ablesen.

Wie bereits erwähnt kann die Recheneinheit 9 außerdem zum Ermitteln von den Beleuchtungsstärke-Werten in dem detektierten Teil der Lichtverteilung 4 und zum Vergleichen der Beleuchtungsstärke-Werte mit dazu korrespondierenden vorgegebenen Schwellenwerten und zum Zuordnen einem jeden Beleuchtungsstärke-Wert, der den dazu korrespondierenden Schwellenwert übersteigt, eines Paars aus einem Lichtstärke-Wert und einer dem Lichtstärke-Wert korrespondierenden Raumrichtung, wobei diese Paare die Information über eine Blendung verursachende Fehleinstellung bilden eingerichtet sein.

Außerdem kann das Rückmelde-System 7 ein Computerprogramm mit Befehlen umfassen, die Befehle bei der Ausführung des Computerprogramms durch das Rückmelde-System 7 dieses dazu veranlassen, Schritte des oben beschriebenen Verfahrens zum Bereitstellen der elektromagnetischen Signale 5 auszuführen. Das Computerprogramm kann beispielsweise auf einem vorzugsweise tragbaren computerlesbaren Speichermedium, das an die Recheneinheit 9 angeschlossen werden kann oder auf der Recheneinheit 9 direkt gespeichert sein.

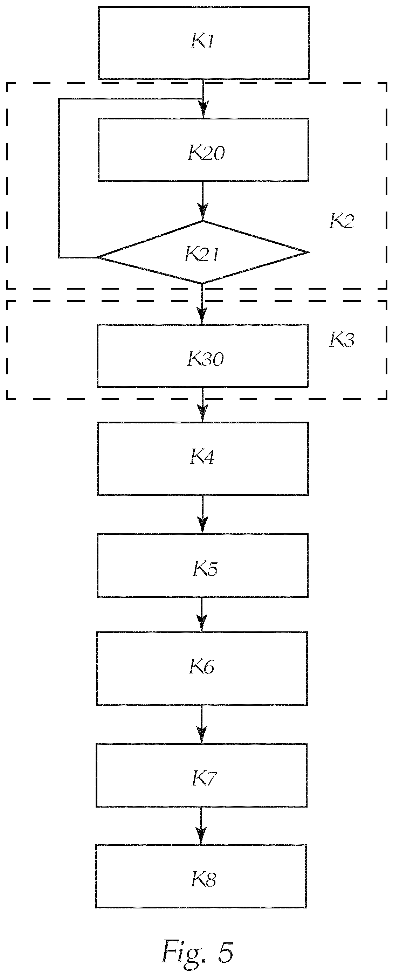

Bezugnehmend auf Figuren 2 und 5 wird nun ein Verfahren beschrieben, das auf den oben beschriebenen Verfahren zum Rückmelden (elektromagnetische Signale) der unerwünschten Abweichungen (Blendung) in der Lichtverteilung an ein Kraftfahrzeugscheinwerfersystem 1 und zum Justieren des Kraftfahrzeugscheinwerfers 3 anhand dieser Rückmeldung. Das in Figur 5 als Blockdiagramm dargestellte Verfahren kann bei einer in Figur 2 schematisch gezeigten Situation verwendet werden und dient beispielsweise zum Justieren eines in einem ersten Kraftfahrzeug **100** angeordneten Kraftfahrzeugscheinwerfersystems 1 während seines Betriebs mithilfe einer Rückmeldung in Form elektromagnetischer Signale 5, die mittels eines in einem zweiten Kraftfahrzeug **200** angeordneten Rückmelde-Systems 7 erzeugt werden. Die Rückmeldung wird generell in Reaktion auf eine mittels (beider) Kraftfahrzeugscheinwerfer 3 erzeugte (blendende) Lichtverteilung erzeugt. Der Fachmann versteht, dass das Rückmelde-System 7 oder ein weiteres beispielsweise identisches Rückmelde-System 7 in dem ersten Kraftfahrzeug 100 angeordnet sein kann und das zu justierende Kraftfahrzeugscheinwerfersystem 1 in dem zweiten Kraftfahrzeug 200 angeordnet sein kann. Vorzugsweise sind beide Kraftfahrzeuge 100, 200 sowohl mit einem passenden Kraftfahrzeugscheinwerfersystem 1 und einem entsprechenden Rückmelde-System 7 ausgestattet.

Wie oben beschrieben, umfasst das Kraftfahrzeugscheinwerfersystem 1 die Steuereinrichtung 2. Darüber hinaus sind der Steuereinrichtung 2 zwei Kraftfahrzeugscheinwerfer 3 zugeordnet. Weiters umfasst das Kraftfahrzeugscheinwerfersystem 1 Detektionsmittel 20, die der Steuereinrichtung 2 zugeordnet sind und eingerichtet ist, eine Lichtverteilung 4, beispielsweise eine Fernlichtverteilung oder eine dynamisch modifizierbare ADB-Lichtverteilung, zu erzeugen, die durch Einstellen der Kraftfahrzeugscheinwerfer 3 mittels der Steuereinrichtung 2 dynamisch modifizierbar ist, und die Rückmeldung auf die erzeugte Lichtverteilung 4 (von der Lichtverteilung 4 verursachte Blendung) erfolgt. Es versteht sich, dass, wenn die Schritte des Verfahrens wiederholt werden, weil die modifizierte Lichtverteilung 6 immer noch eine Blendung verursacht, die Rückmeldung auf die modifizierte Lichtverteilung 6 erfolgt. Die Detektionsmittel 20 sind zum Detektieren der Rückmeldung in Form elektromagnetischer Signale 5 eingerichtet, wobei die elektromagnetischen Signale 5 für das Justieren des Kraftfahrzeugscheinwerfersystems 1 beziehungsweise der Kraftfahrzeugscheinwerfer 3 des Kraftfahrzeugscheinwerfersystems 1 relevante Daten 50 beinhalten, und die Daten 50 ihrerseits Information über eine Blendung verursachende Fehleinstellung der Kraftfahrzeugscheinwerfers 3 tragen. Die Steuereinrichtung 2 ist zum Auswerten der Rückmeldung (der elektromagnetischen Signale 5) hinsichtlich dieser Daten 50 und zum Extrahieren der Information aus den Daten 50 eingerichtet. Das Rückmelde-System 7 umfasst, wie bereits erwähnt, die Detektionseinrichtung in Form von mehreren Lichtsensoren 80, die Recheneinheit 9 und die beispielsweise mehrere Sender/Senderantennen aufweisende Übertragungseinrichtung 10.

Die Detektionseinrichtung 8, 80 ist eingerichtet, zumindest einen Teils der dynamisch modifizierbaren Lichtverteilung 4 (beispielsweise einer ADB-Fernlichtverteilung) zumindest eines vorgegebenen Typs zu detektieren. Die mit der Detektionseinrichtung 8, 80 zum Informationsaustausch verbundene Recheneinheit 9 erhält dabei von der Detektionseinrichtung 8, 80 detektierte Daten, wie beispielsweise zumindest ein Teil der Lichtverteilung 4 in Form von einer Verteilung von Beleuchtungsstärke-Werten beziehungsweise eine Lichtintensitätsverteilung oder vereinzelte Beleuchtungsstärke-Werte mit dazugehörigen Raumrichtungen. Die Recheneinheit 9 ist eingerichtet, den zumindest einen Teil der Lichtverteilung 4 mit einem dem zumindest einem Teil korrespondierenden Teil einer gewünschten Lichtverteilung, zum Ermitteln der Abweichungen zwischen dem zumindest einen Teil der Lichtverteilung 4 und dem korrespondierenden Teil der gewünschten Lichtverteilung zu vergleichen, und diese Abweichungen in Form der die Information über eine Blendung verursachende Fehleinstellung enthaltenden, zum Justieren des zumindest einen Kraftfahrzeugscheinwerfers 3 relevanten Daten 50 zu repräsentieren. Die Abweichungen können beispielsweise die Abweichungen von den oben genannten Schwellenwerten der Beleuchtungsstärke sein.

Die Übertragungseinrichtung 10 ist eingerichtet, gemäß den Daten 50, beispielsweise in Abhängigkeit von den ermittelten Abweichungen, die elektromagnetischen Signale 5 zu generieren und diese elektromagnetischen Signale 5 in Richtung des Kraftfahrzeugscheinwerfersystems 1 des ersten Kraftfahrzeugs 100 zu senden.

In einem ersten Schritt des Verfahrens - in dem Schritt K1 - wird der zumindest eine Teil der Lichtverteilung 4 mittels der Detektionseinrichtung detektiert.

In einem zweiten Schritt - Schritt K2 - identifiziert die Recheneinheit 9 Bereiche in dem detektierten Teil der Lichtverteilung 4, in denen eine Blendung vorliegt. In Schritt K30 ordnet die Recheneinheit 9 den identifizierten Bereichen einer Information über eine Blendung verursachende Fehleinstellung des zumindest einen Kraftfahrzeugscheinwerfers 3 zu.

Figur 5 zeigt ein Beispiel, bei welchem Schritt K2 Teilschritte K20 und K21 aufweist und das Zuordnen den identifizierten Bereichen einer Information über eine Blendung verursachende Fehleinstellung in Schritt K3 gemäß Schritt K30 ausgeführt wird. In dem Schritt K20 ermittelt die Recheneinheit 9 anhand von dem zumindest einen detektierten Teil der Lichtverteilung 4 Beleuchtungsstärke-Werte. Anschließend - in Schritt K21 - werden die ermittelten Beleuchtungsstärke-Werte mit dazu korrespondierenden vorgegebenen Schwellenwerten verglichen. Je nach Situation können die Schwellenwerte der Beleuchtungsstärke unterschiedlich sein. Wenn beispielsweise die Lichtverteilung 4 nicht zum Beleuchten vorgesehene Bereiche - Ausblendbereiche - umfasst, können die Schwellenwerte etwa 1 Lux betragen. Es kann auch denkbar sein, die Schwellenwerte an dem Fachmann aus dem Stand der Technik bekannte Blendwerte anzupassen. Unter den Blendwerten sind dabei jene Werte der Beleuchtungsstärke, der Lichtintensität o.Ä. zu verstehen, ab welchen eine Blendung, beispielsweise physiologische oder psychologische Blendung, auftritt. Wenn der Beleuchtungsstärke-Wert den Schwellenwert vorzugsweise mit statistischer Relevanz übersteigt, geht man zu einem vierten Schritt - Schritt K30 - über. Andernfalls wird nächster Beleuchtungsstärke-Wert ausgewählt und wie eben beschrieben analysiert.

In Schritt K30 ordnet die Recheneinheit 9 jedem Beleuchtungsstärke-Wert, der den dazu korrespondierenden Schwellenwert übersteigt, ein Paar von aus den ermittelten/gemessenen Beleuchtungsstärke-Werten errechneten Werten zu, das einen Lichtstärke-Wert und eine dem Lichtstärke-Wert korrespondierenden Raumrichtung (Abstrahlrichtung) enthält. Anhand dieser Werte kann die Steuereinrichtung 2 des Kraftfahrzeugscheinwerfersystems 1 die Kraftfahrzeugscheinwerfer 3 derart steuern, dass der entsprechende Beleuchtungsstärke-Wert reduziert wird und den dazu korrespondierenden Schwellenwert nicht mehr übersteigt. Diese Paare bilden vorzugsweise die Information über eine Blendung verursachende Fehleinstellung der Kraftfahrzeugscheinwerfer 3. Es ist auch denkbar, zusätzlich zu den Paaren gewünschte/vorgegebene Lichtstärke-Werte zu der Information über eine Blendung verursachende Fehleinstellung der Kraftfahrzeugscheinwerfer 3 hinzuzufügen. In diesem Fall bekommt das Kraftfahrzeugscheinwerfersystem 1 nicht nur die tatsächlich abgestrahlten, aus den gemessenen Beleuchtungsstärke-Werten errechneten Lichtstärke-Werte (Ist-Werte) sondern auch jene Lichtstärke-Werte zurückgemeldet, die seine Kraftfahrzeugscheinwerfer 3 abzustrahlen haben (Soll-Werte).

In einem fünften Schritt - Schritt K4 - wird die Information in Form von den zum Justieren des zumindest einen Kraftfahrzeugscheinwerfers 3 relevanten Daten 50 repräsentiert, wie beispielsweise Lichtstärke-Sollwerte und dazu entsprechenden Abstrahlrichtungen oder eine Position eines Segments (beispielsweise bei segmentierten Fernlichtverteilungen oder ADB-Lichtverteilungen), das zu dimmen und/oder auszublenden gilt.

In einem sechsten Schritt - Schritt K5 - werden die elektromagnetischen Signale 5 gemäß den Daten 50 mittels der Übertragungseinrichtung 10 generiert. Das heißt, die elektromagnetischen Signale 5 dienen als Informationsträger zum Übertragen der Daten 50. Anschließend werden die elektromagnetischen Signale 5 in Richtung des Kraftfahrzeugscheinwerfersystems 1 des ersten Kraftfahrzeugs 100 ausgesandt. Dazu kann die Übertragungseinrichtung 10 beispielsweise Richtantennen o.Ä. aufweisen.

Nachdem das Rückmelde-System 7 des zweiten Kraftfahrzeugs 200 die elektromagnetischen Signale 5 in Richtung des ersten Kraftfahrzeugs 100 gesendet hat, werden diese in einem siebten Schritt - Schritt K6 - mithilfe der Detektionsmittel 20 des Kraftfahrzeugscheinwerfersystems 1 des ersten Kraftfahrzeugs 100 detektiert.

In einem achten Schritt - Schritt K7 - werden die elektromagnetischen Signale 5 hinsichtlich darin enthaltener für das Justieren relevanter Daten 50 ausgewertet, wobei anschließend die Information über die Blendung verursachende Fehleinstellung des zumindest einen Kraftfahrzeugscheinwerfers 3 aus den Daten 50 extrahiert wird. Dies erfolgt mittels der Steuereinrichtung 2 in dem ersten Kraftfahrzeug 100. Dadurch werden beispielsweise die oben beschriebenen Paare erhalten. Anhand dieser Paare bekommt die Steuereinrichtung 2 die Abstrahlrichtung und den in diese Abstrahlrichtung tatsächlich abgestrahlten Lichtstärke-Wert. Aus dieser Information kann die Steuereinrichtung 2 Lichtstärke bestimmen, die in diese Abstrahlrichtung abgestrahlt werden soll - Lichtstärke-Sollwert. Wie bereits erwähnt, können der Lichtstärke-Sollwerte auch durch die Recheneinheit 9 des Rückmelde-Systems 7 errechnet und mit den elektromagnetischen Signalen 5 mitgeschickt werden. Wenn die Kraftfahrzeugscheinwerfer 3 beispielsweise halbleiterbasierten Lichtquellen, vorzugsweise LED-Lichtquellen aufweisen, kann die abgegebene Lichtstärke durch Verringern von Strom durch die Lichtquellen - Dimmen - reduziert werden.

In einem achten Schritt - Schritt K8 - wird das Kraftfahrzeugscheinwerfersystem 1 beziehungsweise werden die Kraftfahrzeugscheinwerfer 3 des Kraftfahrzeugscheinwerfersystems 1 mittels der Steuereinrichtung 2 justiert.

Aufgrund der extrahierten Information modifiziert die Steuereinrichtung 2 die ursprüngliche Lichtverteilung 4, um die modifizierte Lichtverteilung 6 zu erzeugen, und stellt die Kraftfahrzeugscheinwerfer 3 gemäß den ausgewerteten Daten 50 und der aus den Daten 50 extrahierten Information dabei so ein, dass die modifizierte Lichtverteilung 6 keine die Schwellenwerte überschreitende Beleuchtungsstärke-Werte aufweist. Dies kann beispielsweise, wie oben beschrieben, durch Reduzieren der abgestrahlten Lichtstärke in aus den Daten 50 extrahierten Raumrichtungen erfolgen, bis vorzugsweise Lichtstärke-Sollwerte erreicht sind.

Es versteht sich, dass das oben beschriebene Verfahren zwischen zwei Kraftfahrzeugen beidseitig durchgeführt werden kann. Wie bereits erwähnt, wenn beide einander entgegenkommende Kraftfahrzeuge, wie beispielsweise das erste Kraftfahrzeug 100 und das zweite Kraftfahrzeug 200, sowohl ein Kraftfahrzeugscheinwerfersystem 1 als auch ein Rückmelde-System 7 aufweisen können beide Kraftfahrzeugscheinwerfersysteme 1 beziehungsweise alle vier Kraftfahrzeugscheinwerfer 3 justiert werden. Dies ist in Figur 2 eindeutig entnehmbar. Dabei wird Fehleinstellung der entsprechenden Kraftfahrzeugscheinwerfer 3 sowohl von dem ersten Kraftfahrzeug 100 an das zweite Kraftfahrzeug 200 als auch von dem zweiten Kraftfahrzeug 200 an das erste Kraftfahrzeug 100 gemeldet (siehe elektromagnetischen Signale 5, die sich in entgegengesetzten Richtungen ausbreiten).

Der oben beschriebene Austausch der in den Signalen 5 enthaltenen Informationen im Zuge des Verfahrens fand zwischen zwei Kraftfahrzeugen 100 und 200 statt. Dieser Informationsaustausch kann beispielsweise im Rahmen einer Car-2-Car Kommunikation passieren. Car-2-X Szenarien sind auch denkbar, bei welchen das Kraftfahrzeugscheinwerfersystem 1 mit zu justierenden Kraftfahrzeugscheinwerfern 3 in einem Kraftfahrzeug 100, 200 angeordnet ist und das Rückmelde-System 7 als Teil einer Infrastruktur-Einrichtung, beispielsweise einer Ampel- oder einer Verkehrsbeeinflussungsanlage ausgebildet ist.

Figuren 2 und 7 lassen erkennen, dass die Detektionseinrichtung an zumindest einer Längsseite des entsprechenden Kraftfahrzeugs 100, 200, vorzugsweise in zumindest einem Kraftfahrzeugscheinwerfer 3 und/oder in zumindest einem Außenspiegel 101, **102** und/oder einem (Innen-)Rückspiegel 103 angeordnet sein kann. Die Detektionseinrichtung kann als eine Mehrzahl, vorzugsweise vier, von Lichtsensoren 80 ausgebildet sein (siehe Figur 7). Die Lichtsensoren können beispielsweise als Photodioden insbesondere ortsauflösende Photodioden oder als Kameras ausgebildet sein. Besonders vorteilhaft sind die Kameras die ortsauflösend sind und/oder geeignet sind, Leuchtdichteverteilungen aufzunehmen.

Darüber hinaus kann vorgesehen sein, dass die Detektionseinrichtung an einer äußeren Umfangskontur des Kraftfahrzeugs 100, 200 angeordnet ist, welche äußere Umfangskontur in einer zur Längsachse des Kraftfahrzeugs 100, 200 orthogonal stehenden Ebene liegt.

Weiters kann es zweckmäßig sein die Detektionseinrichtung, vorzugsweise Lichtsensoren, insbesondere die Photodioden 80 derart anzuordnen, dass sie die äußere Umfangskontur definieren, wobei ein durch die äußere Umfangskontur begrenzter Bereich blendfrei, insbesondere nicht beleuchtet, bleiben soll (siehe Figur 7). Dieser begrenzte Bereich legt ein auszublendendes Segment, wenn die erzeugte Lichtverteilung beispielsweise eine segmentierte Fernlichtverteilung oder ADB-Lichtverteilung ist. Wenn die Lichtsensoren 80 an bestimmten, vorgegebenen Positionen des Kraftfahrzeugs angeordnet sind, können diese Positionen verwendet werden, um die oben beschriebenen Abstrahlrichtungen zu bestimmen, aus denen eine Blendung ausgeht.

Wie bereits erwähnt können die Verfahren iterativ wiederholt werden (in Form einer Schleife implementiert werden). Das Kraftfahrzeugscheinwerfersystem 1, beispielsweise ein ADB-System, erhält dann über eine Zeitspanne, die vorzugsweise der Zeit des Vorbeifahrens der Kraftfahrzeuge 100 und 200 aneinander entspricht, beispielsweise über mehrere Sekunden die elektromagnetischen Signale 5, die die Information über Fehleinstellung in digitaler Form - "Blendung JA/NEIN" Signale - enthalten können (plus die Abstrahlrichtung aus der die Blendung kommt). In Reaktion auf die vorgenannten Signale 5 kann sich das beispielsweise über die Kamera "grundeingestellte" Kraftfahrzeugscheinwerfersystem 1 ohne großen Rechenaufwand an die optimale Ausblendgeometrie "herantasten", wobei optimale Lichtstärkewerte iterativ erreicht werden. Im Idealfall erfolgt diese Justierung so schnell, dass dabei auftretende sehr kurze Blendungsblitze vom Fahrer von Fahrzeug A nicht störend wahrgenommen werden.

Darüber hinaus kann das Kraftfahrzeugscheinwerfersystem 1 durch Auswertung der Signale und Extrahieren der Information aus den Daten 50 seine Kalibrierung/Grundeinstellung (Zuordnung zwischen Leuchtpixel mit Abstrahlcharakteristik und einer beispielsweise durch eine Kamera gemessene Lichtverteilung) überprüfen und diese optimieren.

Durch die vorliegende Erfindung wird außerdem ein Szenario ermöglicht, bei dem ein Kraftfahrzeug das Werk verlässt, ohne dass seine Scheinwerfer eingestellt sind, d.h. völlig ohne Voreinstellungen. Anstatt einer komplizierten und oft ungenauen Einstellung kann ein Kraftfahrzeug beim Verlassen des Montagebandes im Zuge einer Qualitätssicherung eine Strecke abfahren, welche mit oben beschriebenen Rückmelde-Systemen 7 (wie in Figur 7) ausgestattet ist. So kann das Kraftfahrzeug beim Verlassen der Fabrik selbst eine passende Grundeinstellung finden und behebt auf diese Weise automatisch jegliche Einbauungenauigkeiten in seinen Scheinwerfern und/ oder zwischen seinen Scheinwerfer und Karosserie / Kamera. Beispielsweise lässt Figur 7 erkennen, dass das Rückmelde-System 7 ermöglicht, aus einer ursprünglich beliebig eingestellten Hell-Dunkel-Grenze HD0 richtig positionierte und/oder geformte Hell-Dunkel-Grenzen HD1, HD2 einer Abblendlichtverteilung zu erzielen. Darüber hinaus ermöglicht ein Rückmelde-System 7 Ausblendbereiche einzustellen. Figur 7 lässt erkennen, dass ein einer voraussichtlichen Position des Kopfes **81** eines Fahrers eines entgegenkommenden Kraftfahrzeugs entsprechender Ausblendbereich eingestellt wird. Die Position des Kopfes 81 kann beispielsweise anhand von zusätzlichen Referenz-Sensoren **82** ermittelt werden, die in der Detektionseinrichtung vorgesehen sind. Alternativ kann die Detektionseinrichtung zusätzliche Lichtsensoren, beispielsweise Photodioden (nicht gezeigt) vorsehen, die zum Eingrenzen des vorgenannten Ausblendbereichs angeordnet sind.

Die Bezugsziffern in den Ansprüchen und in der Beschreibung dienen lediglich zu einem besseren Verständnis der vorliegenden Anmeldung und sollen auf gar keinen Fall als eine Beschränkung des Gegenstands der vorliegenden Erfindung angesehen werden.

Die vorstehende Diskussion der Erfindung wurde zu Zwecken der Darstellung und Beschreibung vorgestellt. Das Vorstehende soll die Erfindung nicht auf die hierin offenbarte Form oder Formen beschränken. In der vorstehenden ausführlichen Beschreibung sind beispielsweise verschiedene Merkmale der Erfindung in einer oder mehreren Ausführungsformen zum Zwecke der Straffung der Offenbarung zusammengefasst. Diese Art der Offenbarung ist nicht so zu verstehen, dass sie die Absicht widerspiegelt, dass die beanspruchte Erfindung mehr Merkmale erfordert, als in jedem Anspruch ausdrücklich erwähnt wird. Vielmehr liegen, wie die folgenden Ansprüche widerspiegeln, erfinderische Aspekte in weniger als allen Merkmalen einer einzigen vorstehend beschriebenen Ausführungsform vor. Somit werden die folgenden Ansprüche hiermit in diese detaillierte Beschreibung aufgenommen, wobei jeder Anspruch allein als eine separate bevorzugte Ausführungsform der Erfindung steht.

Darüber hinaus liegen, obwohl die Beschreibung der Erfindung die Beschreibung einer oder mehrerer Ausführungsformen und bestimmter Variationen und Modifikationen enthält, andere Variationen und Modifikationen innerhalb des Umfangs der Erfindung, z. B. innerhalb der Fähigkeiten und Kenntnisse von Fachleuten, nach dem Verständnis der vorliegenden Offenbarung.

## Patentansprüche

1. Verfahren zum Justieren eines Kraftfahrzeugscheinwerfer (3) eines Kraftfahrzeugscheinwerfersystems (1) für ein erstes Kraftfahrzeug (100) während seines Betriebs mithilfe einer Rückmeldung in Form elektromagnetischer Signale (5), bereitgestellt von einem Rückmelde-System (7) in einem zweiten Kraftfahrzeug (200), wobei
* das Kraftfahrzeugscheinwerfersystem (1) eine Steuereinrichtung (2), zumindest einen der Steuereinrichtung (2) zugeordneten Kraftfahrzeugscheinwerfer (3) und der Steuereinrichtung (2) zugeordnete Detektionsmittel (20) umfasst und dazu eingerichtet ist, eine Lichtverteilung (4) zumindest eines vorgegebenen Typs zu erzeugen, welche Lichtverteilung (4) durch Einstellen des zumindest einen Kraftfahrzeugscheinwerfers (3) mittels der Steuereinrichtung (2) zu einer modifizierten Lichtverteilung (6) dynamisch modifizierbar ist, wobei
- die Detektionsmittel (20) zum Detektieren der elektromagnetischen Signale (5) eingerichtet sind, welche elektromagnetischen Signale (5) für das Justieren des Kraftfahrzeugscheinwerfersystems (1) relevante Daten (50) beinhalten, wobei die Daten (50) Information über eine Blendung verursachende Fehleinstellung des zumindest einen Kraftfahrzeugscheinwerfers (3) beinhalten, und
- die Steuereinrichtung (2) zum Auswerten der elektromagnetischen Signale (5) hinsichtlich der Daten (50) und zum Extrahieren der Information aus den Daten (50) eingerichtet ist, wobei
das Rückmelde-System (7) zur Berechnung und Ausgabe des elektromagnetischen Signals (5) umfasst:
* eine Detektionseinrichtung (8, 80), eine Recheneinheit (9) und eine Übertragungseinrichtung (10) - hinsichtlich des Kraftfahrzeugscheinwerfersystems (1) - extern bereitgestellt sind und zum Erzeugen der Rückmeldung auf die Lichtverteilung (4) eingerichtet sind, wobei
- die Detektionseinrichtung (8, 80) zum Detektieren zumindest eines Teils der dynamisch modifizierbaren Lichtverteilung (4) zumindest eines vorgegebenen Typs eingerichtet ist;
- die Recheneinheit (9) zum Identifizieren von Bereichen in dem detektierten Teil der Lichtverteilung (4), in denen eine Blendung vorliegt, zum Zuordnen den identifizierten Bereichen einer Information über eine Blendung verursachende Fehleinstellung des zumindest einen Kraftfahrzeugscheinwerfers (3) und zum Repräsentieren der Information in Form von den zum Justieren des zumindest einen Kraftfahrzeugscheinwerfers (3) relevanten Daten (50) eingerichtet ist, und
- die Übertragungseinrichtung (10) zum Generieren der elektromagnetischen Signale (5) gemäß den Daten (50) und zum Senden der elektromagnetischen Signale (5) in eine vorgegebene Richtung eingerichtet ist,
welches Verfahren folgende Schritte umfasst:
Schritt K1: Detektieren des zumindest einen Teils der Lichtverteilung (4) mittels der Detektionseinrichtung (8, 80);
Schritt K2: Identifizieren von Bereichen in dem detektierten Teil der Lichtverteilung (4), in denen eine Blendung vorliegt, wobei Beleuchtungsstärke-Werte in dem detektierten Teil der Lichtverteilung ermittelt werden und die ermittelten Beleuchtungsstärke-Werte anschließend mit einem vorgegebenen Schwellenwert verglichen werden,
Schritt K3: Zuordnen den identifizierten Bereichen einer Information über eine Blendung verursachende Fehleinstellung des zumindest einen Kraftfahrzeugscheinwerfers (3), wobei die Recheneinheit zum Zuordnen einem jeden Beleuchtungsstärke-Wert, der den dazu korrespondierenden Schwellenwert übersteigt, ein Paar aus einem Lichtstärke-Wert und einer dem Lichtstärke-Wert korrespondierenden Raumrichtung, in welche der zumindest eine Kraftfahrzeugscheinwerfer (3) eine Blendung verursachende Lichtmenge abstrahlt, zuordnet, wobei dieses Paar die Information über eine Blendung verursachende Fehlstellung bilden;
Schritt K4: Repräsentieren der Information in Form von den zum Justieren des zumindest einen Kraftfahrzeugscheinwerfers (3) relevanten Daten (50);
Schritt K5: Generieren der elektromagnetischen Signale (5) gemäß den Daten (50) und Senden der elektromagnetischen Signale (5) in Richtung des zumindest einen Kraftfahrzeugscheinwerfersystems (1) mittels der Übertragungseinrichtung (10);
Schritt K6: Detektieren der elektromagnetischen Signale (5) mithilfe der Detektionsmittel (20);
Schritt K7: Auswerten der elektromagnetischen Signale (5) hinsichtlich darin enthaltener für das Justieren relevanter Daten (50) und Extrahieren der Information über die Blendung verursachende Fehleinstellung des zumindest einen Kraftfahrzeugscheinwerfers (3) aus den Daten (50) mittels der Steuereinrichtung (2);
Schritt K8: Justieren des Kraftfahrzeugscheinwerfersystems (1) mittels der Steuereinrichtung (2) zum Modifizieren der Lichtverteilung (4) aufgrund der extrahierten Information, um die modifizierte Lichtverteilung (6) zu erzeugen, wobei das Justieren des Kraftfahrzeugscheinwerfersystems (1) durch Einstellen des zumindest einen Kraftfahrzeugscheinwerfers (3) mittels der Steuereinrichtung (2) gemäß den ausgewerteten Daten (50) und der aus den Daten extrahierten Information erfolgt, wobei die in die Raumrichtungen abgestrahlte Lichtmenge um einen vorgegebenen Wert reduziert wird, um die modifizierte Lichtverteilung (6) zu erhalten.

2. Verfahren nach Anspruch 1, **dadurch gekennzeichnet, dass** die Information über eine Blendung verursachende Fehleinstellung umfasst:
- zumindest eine Abstrahlrichtung (α, β), in welche zumindest eine Abstrahlrichtung (α, β) der zumindest eine Kraftfahrzeugscheinwerfer (3) blendet,
- einen dieser zumindest einen Abstrahlrichtung (α, β) zugeordneten Ist-Wert der von dem Kraftfahrzeugscheinwerfer (3) in diese Abstrahlrichtung (α, β) abgegebenen Lichtstärke, und
- einen dieser zumindest einen Abstrahlrichtung (α, β) zugeordneten Soll-Wert der Lichtstärke, wobei das Justieren des Kraftfahrzeugscheinwerfersystems (1) solange erfolgt, bis der Ist-Wert den Soll-Wert nicht mehr übersteigt.

3. Verfahren nach Anspruch 1 oder 2, **dadurch gekennzeichnet, dass** aufgrund des Justierens des Kraftfahrzeugscheinwerfersystems (1) durch die Steuereinrichtung (2) eine horizontale und/oder eine vertikale Ausdehnung der Lichtverteilung (4) verringert wird.

4. Verfahren nach einem der Ansprüche 1 bis 3, **dadurch gekennzeichnet, dass** aufgrund des Justierens des Kraftfahrzeugscheinwerfersystems (1) durch die Steuereinrichtung (2) die Lichtverteilung (4) horizontal und/oder vertikal verschoben wird.

5. Verfahren nach einem der Ansprüche 1 bis 4, **dadurch gekennzeichnet, dass** das Justieren mittels Verringerns einer in zumindest eine Richtung abgegebenen Lichtstärke, wobei das Verringern mittels Änderung zumindest eines, vorzugsweise horizontalen, Abstrahlwinkels des zumindest einen Kraftfahrzeugscheinwerfers erfolgt.

6. Verfahren nach einem der Ansprüche 1 bis 5, **dadurch gekennzeichnet, dass** auf der Steuereinrichtung (2) Grundeinstellungen gespeichert sind, gemäß welchen Grundeinstellungen die Lichtverteilung (4) bei Inbetriebnahme des Kraftfahrzeugscheinwerfersystems erzeugt wird, wobei die Steuereinrichtung (2) aufgrund dieser Grundeinstellungen und der extrahierten Information über die Blendung verursachende Fehleinstellung modifizierte Einstellungen erzeugt und gemäß diesen modifizierten Einstellungen das Kraftfahrzeugscheinwerfersystem (1) justiert, damit die modifizierte Lichtverteilung (6) erzeugt wird.

7. Verfahren nach Anspruch 6, **dadurch gekennzeichnet, dass** die Steuereinrichtung (2) die modifizierten Einstellungen speichert und auf der Steuereinrichtung (2) eine Software zum maschinellen Lernen installiert ist, welche dazu programmiert ist, aufgrund der Grundeinstellungen und der modifizierten Einstellungen zu entscheiden, zumindest einen Teil der Grundeinstellungen durch einen korrespondierenden Teil der Einstellungen zu ersetzen oder die Grundeinstellungen unverändert zu lassen.

## Claims

1. Method for adjusting a motor vehicle headlamp (3) of a motor vehicle headlamp system (1) for a first motor vehicle (100) during its operation with the aid of feedback in the form of electromagnetic signals (5) provided by a feedback system (7) in a second motor vehicle (200), wherein
* the motor vehicle headlamp system (1) comprises a control device (2), at least one motor vehicle headlamp (3) assigned to the control device (2) and detection means (20) assigned to the control device (2) and is set up to generate a light distribution (4) of at least one predetermined type, which light distribution (4) can be dynamically modified to form a modified light distribution (6) by adjusting the at least one motor vehicle headlamp (3) by means of the control device (2), wherein
- the detection means (20) are set up for detecting the electromagnetic signals (5), which electromagnetic signals (5) contain data (50) relevant for adjusting the motor vehicle headlamp system (1), the data (50) containing information about a misadjustment of the at least one motor vehicle headlamp (3) causing glare, and
- the control device (2) is set up for evaluating the electromagnetic signals (5) with regard to the data (50) and for extracting the information from the data (50), wherein
the feedback system (7) for calculating and outputting the electromagnetic signal (5) comprises:
* a detection device (8, 80), a computing unit (9) and a transmission device (10) - with respect to the motor vehicle headlamp system (1) - are provided externally and are set up to generate the feedback on the light distribution (4), wherein
- the detection device (8, 80) is set up to detect at least part of the dynamically modifiable light distribution (4) of at least one predetermined type;
- the computing unit (9) is arranged to identify areas in the detected part of the light distribution (4) in which glare is present, to assign to the identified areas information about a misadjustment of the at least one motor vehicle headlamp (3) causing glare, and to represent the information in the form of the data (50) relevant for adjusting the at least one motor vehicle headlamp (3), and
- the transmission device (10) is arranged to generate the electromagnetic signals (5) in accordance with the data (50) and to transmit the electromagnetic signals (5) in a predetermined direction,
which method comprises the following steps:
Step K1: detecting the at least one part of the light distribution (4) by means of the detection device (8, 80);
Step K2: identifying areas in the detected part of the light distribution (4) in which glare is present, illuminance values being determined in the detected part of the light distribution and the illuminance values determined subsequently being compared with a predetermined threshold value,
Step K3: assigning to the identified areas information about a glare-causing misalignment of the at least one motor vehicle headlamp (3), the computing unit for assigning to each illuminance value which exceeds the threshold value corresponding thereto a pair of a luminous intensity value and a spatial direction, corresponding to the luminous intensity value, in which the at least one motor vehicle headlamp (3) emits a glare-causing amount of light, this pair forming the information about a glare-causing misalignment;
Step K4: Representing the information in the form of the data (50) relevant for adjusting the at least one motor vehicle headlamp (3);
Step K5: Generating the electromagnetic signals (5) in accordance with the data (50) and transmitting the electromagnetic signals (5) in the direction of the at least one motor vehicle headlamp system (1) by means of the transmission device (10);
Step K6: Detecting the electromagnetic signals (5) by means of the detection means (20);
Step K7: evaluating the electromagnetic signals (5) with regard to data (50) contained therein which is relevant for the adjustment and extracting the information about the misadjustment of the at least one motor vehicle headlamp (3) causing glare from the data (50) by means of the control device (2);
Step K8: adjusting the motor vehicle headlamp system (1) by means of the control means (2) to modify the light distribution (4) based on the extracted information to produce the modified light distribution (6), wherein the motor vehicle headlamp system (1) is adjusted by adjusting the at least one motor vehicle headlamp (3) by means of the control device (2) in accordance with the evaluated data (50) and the information extracted from the data, wherein the amount of light emitted in the spatial directions is reduced by a predetermined value in order to obtain the modified light distribution (6).

2. Method according to claim 1, **characterized in that** the information about a misadjustment causing glare comprises
- at least one emission direction (*α,* β) in which at least one emission direction (*α,* β) of the at least one motor vehicle headlamp (3) dazzles,
- an actual value of the luminous intensity emitted by the motor vehicle headlamp (3) in this beam direction (α, β), which is assigned to this at least one beam direction (α, β), and
- a target value of the luminous intensity associated with this at least one emission direction (α, β), the motor vehicle headlamp system (1) being adjusted until the actual value no longer exceeds the target value.

3. Method according to claim 1 or 2, **characterized in that** a horizontal and/or a vertical extension of the light distribution (4) is reduced as a result of the adjustment of the motor vehicle headlamp system (1) by the control device (2).

4. Method according to one of claims 1 to 3, **characterized in that** the light distribution (4) is shifted horizontally and/or vertically as a result of the adjustment of the motor vehicle headlamp system (1) by the control device (2).

5. Method according to one of claims 1 to 4, **characterized in that** the adjustment is carried out by reducing a luminous intensity emitted in at least one direction, the reduction being carried out by changing at least one, preferably horizontal, beam angle of the at least one motor vehicle headlamp.

6. Method according to one of claims 1 to 5, **characterized in that** basic settings are stored on the control device (2), according to which basic settings the light distribution (4) is generated when the motor vehicle headlamp system is put into operation, the control device (2) generating modified settings on the basis of these basic settings and the extracted information about the incorrect setting causing glare and adjusting the motor vehicle headlamp system (1) according to these modified settings so that the modified light distribution (6) is generated.

7. Method according to claim 6, **characterized in that** the control device (2) stores the modified settings and machine learning software is installed on the control device (2), which is programmed to decide, on the basis of the basic settings and the modified settings, to replace at least some of the basic settings with a corresponding part of the settings or to leave the basic settings unchanged.

## Revendications

1. Procédé de réglage d'un projecteur de véhicule automobile (3) d'un système de projecteur de véhicule automobile (1) pour un premier véhicule automobile (100) pendant son fonctionnement à l'aide d'une rétroaction sous forme de signaux électromagnétiques (5), fournie par un système de rétroaction (7) dans un deuxième véhicule automobile (200), dans lequel
* le système de phares de véhicule (1) comprend un dispositif de commande (2), au moins un phare de véhicule (3) associé au dispositif de commande (2) et des moyens de détection (20) associés au dispositif de commande (2) et est conçu pour générer une répartition de lumière (4) d'au moins un type prédéfini, laquelle répartition de lumière (4) peut être modifiée de manière dynamique en réglant le au moins un phare de véhicule (3) au moyen du dispositif de commande (2) en une répartition de lumière (6) modifiée, où
- les moyens de détection (20) sont conçus pour détecter les signaux électromagnétiques (5), lesquels signaux électromagnétiques (5) contiennent des données (50) pertinentes pour l'ajustement du système de phares de véhicule (1), les données (50) contenant des informations sur un mauvais réglage d'au moins un phare de véhicule (3) qui provoque un éblouissement, et
- le dispositif de commande (2) est conçu pour évaluer les signaux électromagnétiques (5) en ce qui concerne les données (50) et pour extraire l'information des données (50),
le système de rétroaction (7) pour le calcul et la sortie du signal électromagnétique (5) comprenant :
* un dispositif de détection (8, 80), une unité de calcul (9) et un dispositif de transmission (10) - en ce qui concerne le système de phares de véhicule automobile (1) - sont mis à disposition de manière externe et sont conçus pour générer la rétroaction sur la répartition de la lumière (4), dans lequel
- le dispositif de détection (8, 80) est conçu pour détecter au moins une partie de la répartition lumineuse (4) dynamiquement modifiable d'au moins un type prédéfini ;
- l'unité de calcul (9) est agencée pour identifier des zones dans la partie détectée de la répartition de lumière (4) dans lesquelles un éblouissement est présent, pour associer aux zones identifiées une information sur un mauvais réglage de l'au moins un projecteur de véhicule automobile (3) provoquant un éblouissement et pour représenter l'information sous la forme des données (50) pertinentes pour l'ajustement de l'au moins un projecteur de véhicule automobile (3), et
- le dispositif de transmission (10) est conçu pour générer les signaux électromagnétiques (5) conformément aux données (50) et pour émettre les signaux électromagnétiques (5) dans une direction prédéterminée,
lequel procédé comprend les étapes suivantes :
Étape K1 : Détection de la au moins une partie de la distribution de lumière (4) au moyen du dispositif de détection (8, 80) ;
Étape K2 : Identification de zones dans la partie détectée de la distribution de lumière (4) dans lesquelles un éblouissement est présent, des valeurs d'intensité d'éclairage étant déterminées dans la partie détectée de la distribution de lumière et les valeurs d'intensité d'éclairage déterminées étant ensuite comparées à une valeur seuil prédéterminée,
Étape K3 : attribution aux zones identifiées d'une information sur un mauvais réglage, provoquant un éblouissement, de l'au moins un projecteur de véhicule automobile (3), l'unité de calcul pour l'attribution attribuant à chaque valeur d'intensité lumineuse, qui dépasse la valeur seuil correspondante, une paire constituée d'une valeur d'intensité lumineuse et d'une direction spatiale, correspondant à la valeur d'intensité lumineuse, dans laquelle l'au moins un projecteur de véhicule automobile (3) émet une quantité de lumière provoquant un éblouissement, cette paire formant l'information sur un mauvais réglage provoquant un éblouissement ;
Étape K4 : représenter l'information sous la forme des données (50) pertinentes pour l'ajustement de l'au moins un projecteur de véhicule automobile (3) ;
Étape K5 : Générer les signaux électromagnétiques (5) selon les données (50) et émettre les signaux électromagnétiques (5) en direction de l'au moins un système de projecteur de véhicule automobile (1) au moyen du dispositif de transmission (10) ;
Étape K6 : Détecter les signaux électromagnétiques (5) à l'aide des moyens de détection (20) ;
Étape K7 : évaluer les signaux électromagnétiques (5) en ce qui concerne les données (50) qu'ils contiennent et qui sont pertinentes pour l'ajustage et extraire des données (50), au moyen du dispositif de commande (2), l'information sur le mauvais réglage de l'au moins un projecteur de véhicule automobile (3) qui provoque l'éblouissement ;
Étape K8 : ajuster le système de phares de véhicule (1) au moyen du dispositif de commande (2) pour modifier la répartition lumineuse (4) sur la base des informations extraites afin de produire la répartition lumineuse modifiée (6), l'ajustement du système de phares de véhicule automobile (1) s'effectuant par réglage de l'au moins un phare de véhicule automobile (3) au moyen du dispositif de commande (2) selon les données évaluées (50) et l'information extraite des données, la quantité de lumière émise dans les directions spatiales étant réduite d'une valeur prédéterminée pour obtenir la répartition lumineuse modifiée (6).

2. Procédé selon la revendication 1 , **caractérisé en ce que** l'information relative à un mauvais réglage provoquant un éblouissement comprend :
- au moins une direction d'émission (α, β) dans laquelle ladite au moins une direction d'émission (α, β) dudit au moins un projecteur de véhicule automobile (3) éblouit,
- une valeur réelle, associée à cette au moins une direction de rayonnement (α, β), de l'intensité lumineuse émise par le projecteur (3) du véhicule automobile dans cette direction de rayonnement (α, β), et
- une valeur de consigne de l'intensité lumineuse associée à cette au moins une direction de rayonnement (α, β), l'ajustement du système de projecteur de véhicule automobile (1) étant effectué jusqu'à ce que la valeur réelle ne dépasse plus la valeur de consigne.

3. Procédé selon la revendication 1 ou 2, **caractérisé en ce qu'**en raison de l'ajustement du système de projecteur de véhicule automobile (1) par le dispositif de commande (2), une extension horizontale et/ou verticale de la répartition lumineuse (4) est réduite.

4. Procédé selon l'une des revendications 1 à 3, **caractérisé en ce qu'**en raison de l'ajustement du système de projecteur de véhicule automobile (1) par le dispositif de commande (2), la répartition lumineuse (4) est déplacée horizontalement et/ou verticalement.

5. Procédé selon l'une des revendications 1 à 4, **caractérisé en ce que** l'ajustement est réalisé en réduisant une intensité lumineuse émise dans au moins une direction, la réduction étant réalisée en modifiant au moins un angle de rayonnement, de préférence horizontal, dudit au moins un projecteur de véhicule automobile.

6. Procédé selon l'une des revendications 1 à 5, **caractérisé en ce que** des réglages de base sont mémorisés sur le dispositif de commande (2), réglages de base selon lesquels la répartition lumineuse (4) est générée lors de la mise en service du système de projecteurs pour véhicule automobile, le dispositif de commande (2) générant des réglages modifiés sur la base de ces réglages de base et de l'information extraite sur le mauvais réglage provoquant l'éblouissement et ajustant le système de projecteurs pour véhicule automobile (1) selon ces réglages modifiés afin de générer la répartition lumineuse modifiée (6).

7. Procédé selon la revendication 6, **caractérisé en ce que** le dispositif de commande (2) mémorise les réglages modifiés et un logiciel d'apprentissage automatique est installé sur le dispositif de commande (2), lequel est programmé pour décider, sur la base des réglages de base et des réglages modifiés, de remplacer au moins une partie des réglages de base par une partie correspondante des réglages ou de laisser les réglages de base inchangés.
